# EUROPEAN PATENT APPLICATION

(11) **EP 4 752 561 A1**
(43) Date of publication of application: **03.06.2026**
(21) Application number: 24845380.5
(22) Date of filing: 09.07.2024
(51) Int. Cl.: G01P 15/00, G01C 19/56, G01P 21/00

(54) **MULTI-IMU CHIP, METHOD FOR OPERATING MULTI-IMU CHIP, MULTI-IMU, AND PROGRAM**

(30) Priority: 27.07.2023 JP 2023122551
(71) Applicant: Sony Group Corporation, Tokyo 108-0075 (JP)
(72) Inventor: AMANO, Toru, Tokyo 108-0075 (JP); YAMASHITA, Kosei, Tokyo 108-0075 (JP); SONOURA, Akihiro, Tokyo 108-0075 (JP); KAMATA, Hiroyuki, Tokyo 108-0075 (JP); KIMISHIMA, Masato, Tokyo 108-0075 (JP); SAWADA, Tsutomu, Tokyo 108-0075 (JP); HONGO, Kazuo, Tokyo 108-0075 (JP)
(74) Representative: MFG Patentanwälte Meyer-Wildhagen Meggle-Freund Gerhard PartG mbB
(86) International application number: PCT/JP2024/024711
(87) International publication number: WO 2025/022999

(57) **Abstract**

The present disclosure relates to a multi-IMU chip, a method for operating a multi-IMU chip, a multi-IMU, and a program that enable acceleration and angular velocity to be measured with high accuracy at a low cost by using a plurality of the same multi-IMU chips (IMU units) . One of a plurality of IMU units including N IMUs mounted on one multi-IMU chip is set as a master and the others are set as slaves. Each of the IMU units set as slaves combines the measurement results of the N IMUs to generate a self-combined value and transmits the self-combined value to the IMU unit set as the master. The IMU unit set as the master combines the self-combined value and the other unit combined value which is the combined value of the measurement results of the N IMUs of the other IMU units of the other multi-IMU chip, generates a self and other combined value, and transmits the self and other combined value to a host controller as a measurement result. This can be applied to a multi-IMU.

## Description

### Technical Field

The present disclosure relates to a multi-IMU chip, a method for operating a multi-IMU chip, a multi-IMU, and a program, and particularly relates to a multi-IMU chip, a method for operating a multi-IMU chip, a multi-IMU, and a program capable of measuring acceleration and angular velocity at low cost and with high accuracy.

### Background Art

Technology for improving measurement accuracy by integrating measurement results of a plurality of sensors has been proposed.

For example, technology has been proposed in which a plurality of inertial force sensors having different axial directions are arranged to improve measurement accuracy, and even in a case where one sensor does not function, a measurement result of the sensor that does not function is complemented from output results of other sensors to suppress a decrease in measurement accuracy (see PTL 1).

### Citation List

### Patent Literature

PTL 1: JP 2022-075075 A

### Summary of Invention

### Technical Problem

However, with the technology of PTL 1, in order to improve the measurement accuracy, it is necessary to dispose the inertial force sensors having different axial directions, and the inertial force sensors having different axial directions are individually disposed, and thus there is a possibility that the cost may increase.

The present disclosure has been made in light of this situation and is particularly directed at measuring acceleration and angular velocity at low cost and with high accuracy by using a plurality of identical multi-inertial measurement units (IMUs).

### Solution to Problem

A multi-IMU chip and program according to one aspect of the present disclosure includes: an inertial measurement unit (IMU) unit provided with N IMUs configured to detect acceleration and angular velocity; a self-combining unit configured to combine measurement results of the N IMUs and generate a self-combined value; a self and other combining unit configured to combine the self-combined value and an other unit combined value which is a combined value of the measurement results of the N IMUs of an other IMU unit different from the IMU unit and generate a self and other combined value; and a transmission unit configured to transmit the self-combined value or the self and other combined value as the measurement results to a designated transmission destination.

A method for operating, according to one aspect of the present disclosure, a multi-IMU chip provided with an inertial measurement unit (IMU) unit provided with N IMUs configured to detect acceleration and angular velocity includes: combining measurement results of the N IMUs and generating a self-combined value; combining the self-combined value and an other unit combined value which is a combined value of the measurement results of the N IMUs of an other IMU unit different from the IMU unit and generating a self and other combined value; and transmitting the self-combined value or the self and other combined value as the measurement results to a designated transmission destination.

In an aspect of the present disclosure,
measurement results of N Inertial Measurement Units (IMUs) of the IMU unit configured to detect acceleration and angular velocity are combined to generate a self-combined value; the self-combined value and an other unit combined value which is a combined value of the measurement results of the N IMUs of an other IMU unit different from the IMU unit are combined to generate a self and other combined value; and the self-combined value or the self and other combined value is transmitted as the measurement results to a designated transmission destination.

A multi-IMU according to a second aspect of the present disclosure includes: a plurality of multi-IMU chips each including an inertial measurement unit (IMU) unit provided with N IMUs configured to detect acceleration and angular velocity, a self-combining unit configured to combine measurement results of the N IMUs and generate a self-combined value, a self and other combining unit configured to combine the self-combined value and an other unit combined value which is a combined value of the measurement results of the N IMUs of an other IMU unit different from the IMU unit and generate a self and other combined value, and a transmission unit configured to transmit the self-combined value or the self and other combined value as the measurement results to a designated transmission destination; and a host controller configured to set the IMU unit as master or slave and acquire the measurement results, wherein the transmission unit of the IMU unit set as the master transmits the self and other combined value as a measurement result to the host controller.

In the second aspect of the present disclosure, via a plurality of multi-IMU chips, measurement results of N inertial measurement units (IMUs) of the IMU unit provided in an IMU unit configured to detect acceleration and angular velocity are combined to generate a self-combined value, the self-combined value and an other unit combined value which is a combined value of the measurement results of the N IMUs of an other IMU unit different from the IMU unit are combined to generate a self and other combined value, the self-combined value or the self and other combined value is transmitted as the measurement results to a designated transmission destination, via a host controller, the IMU unit is set as master or slave and the measurement results are acquired, and via the IMU unit set as the master, the self and other combined value is transmitted as a measurement result to the host controller.

### Brief Description of Drawings

[Fig. 1]

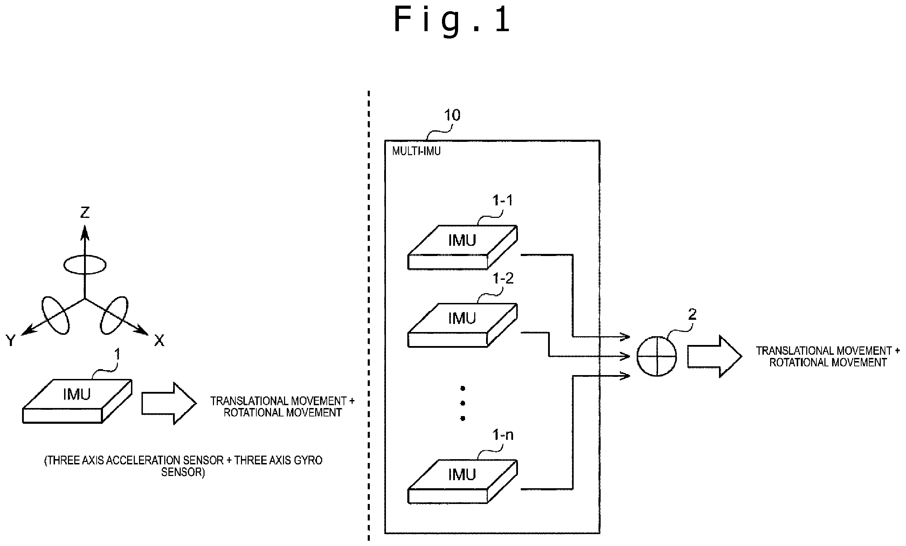

   Fig. 1 is a diagram for describing a multi-IMU.
[Fig. 2]

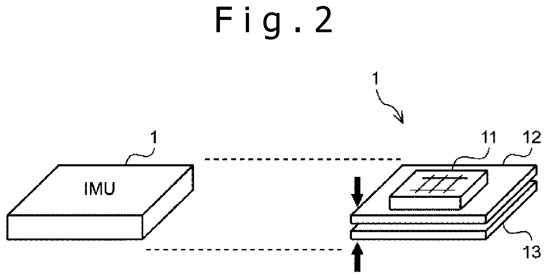

   Fig. 2 is a diagram for describing the structure of an IMU.
[Fig. 3]

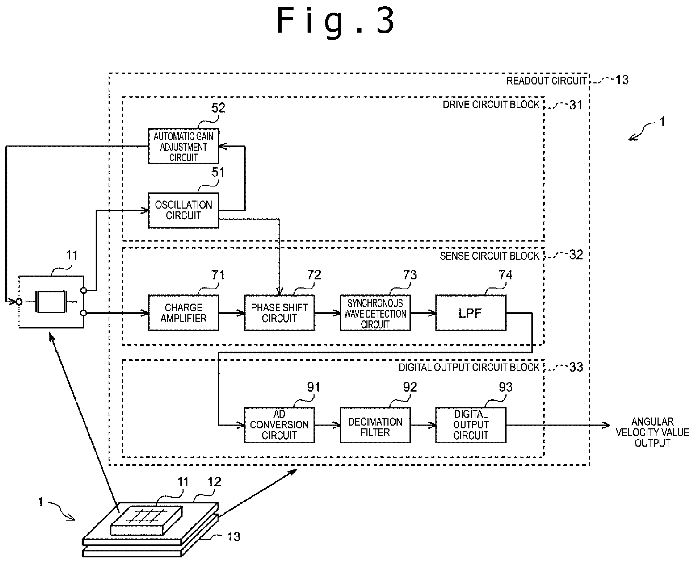

   Fig. 3 is a diagram for describing the circuit configuration of a readout circuit of the IMU of Fig. 2.
[Fig. 4]

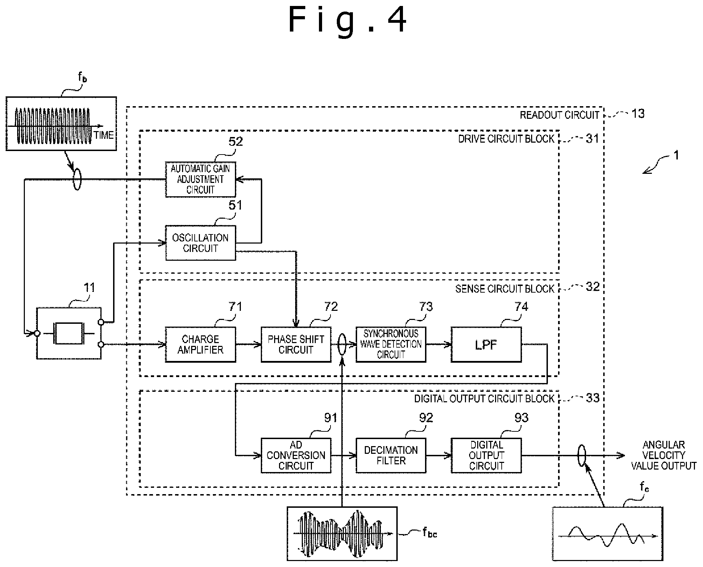

   Fig. 4 is a diagram for describing the operations of the IMU of Fig. 2.
[Fig. 5]

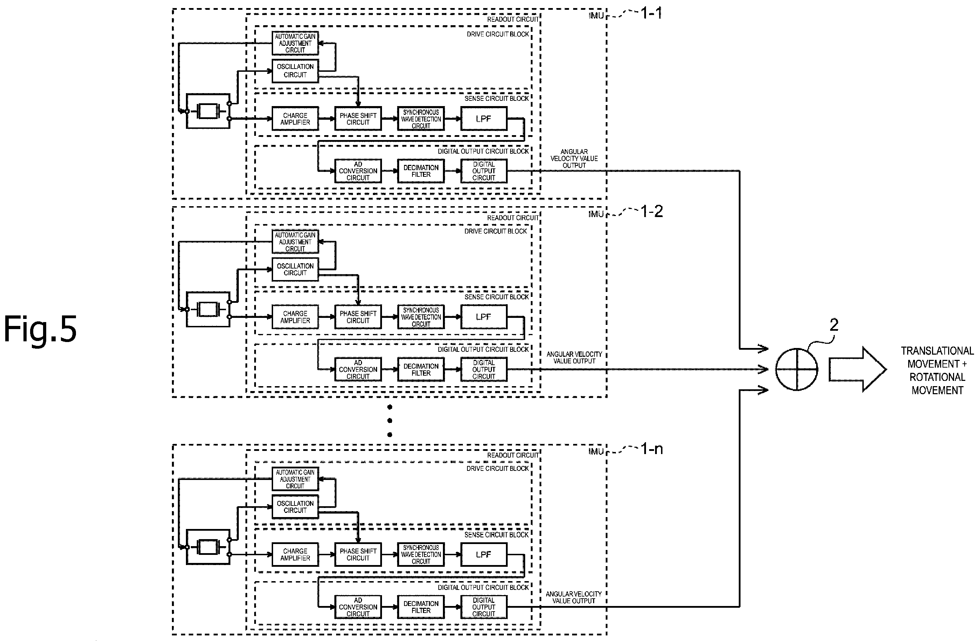

   Fig. 5 is a diagram for describing the operations of a multi-IMU.
[Fig. 6]

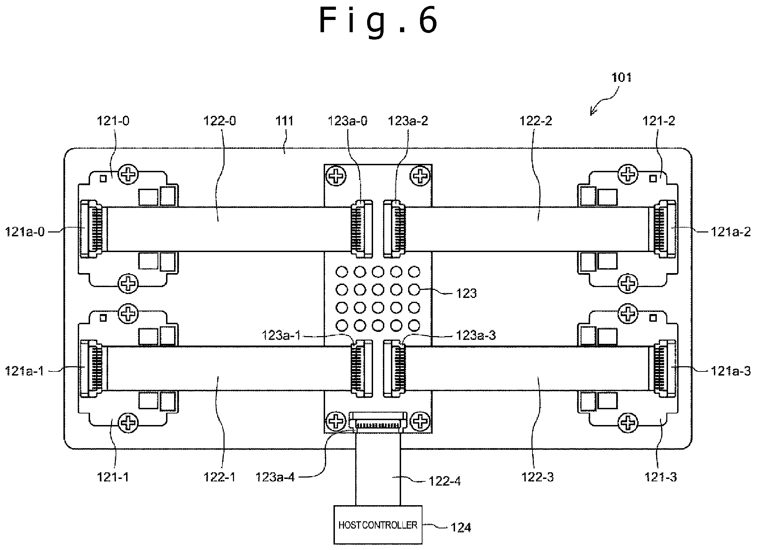

   Fig. 6 is a diagram for describing a configuration example of a first embodiment of a multi-IMU of the present disclosure.
[Fig. 7]

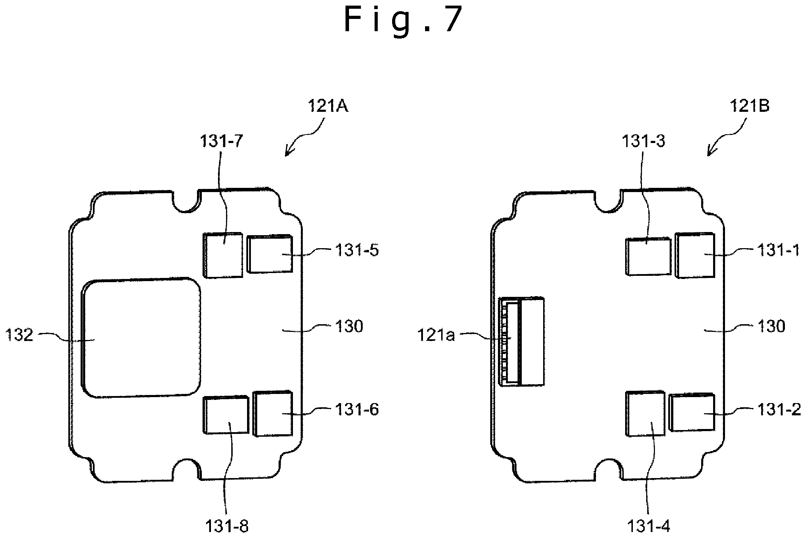

   Fig. 7 is a diagram for describing a configuration example of an IMU unit of Fig. 6.
[Fig. 8]

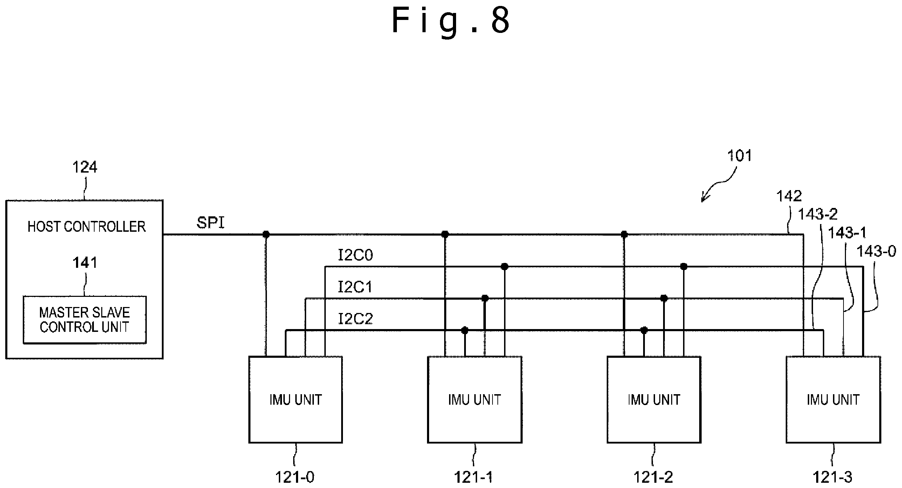

   Fig. 8 is a diagram for describing the functions realized by the multi-IMU of Fig. 6.
[Fig. 9]

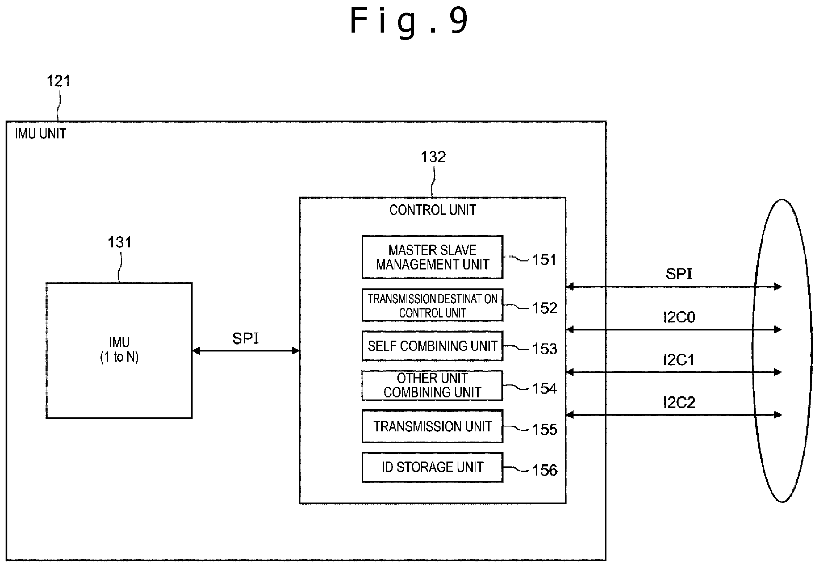

   Fig. 9 is a diagram for describing the functions realized by the IMU unit of Fig. 8.
[Fig. 10]

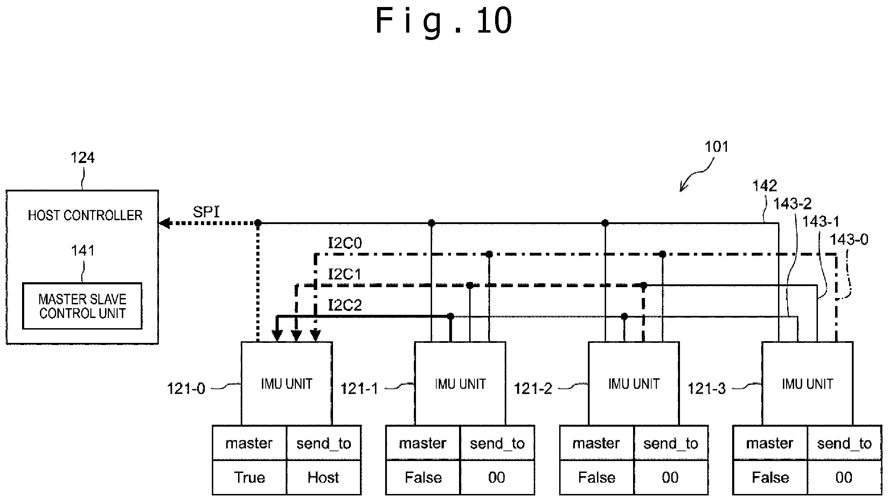

   Fig. 10 is a diagram for describing a setting example of a master and slave of an IMU unit.
[Fig. 11]

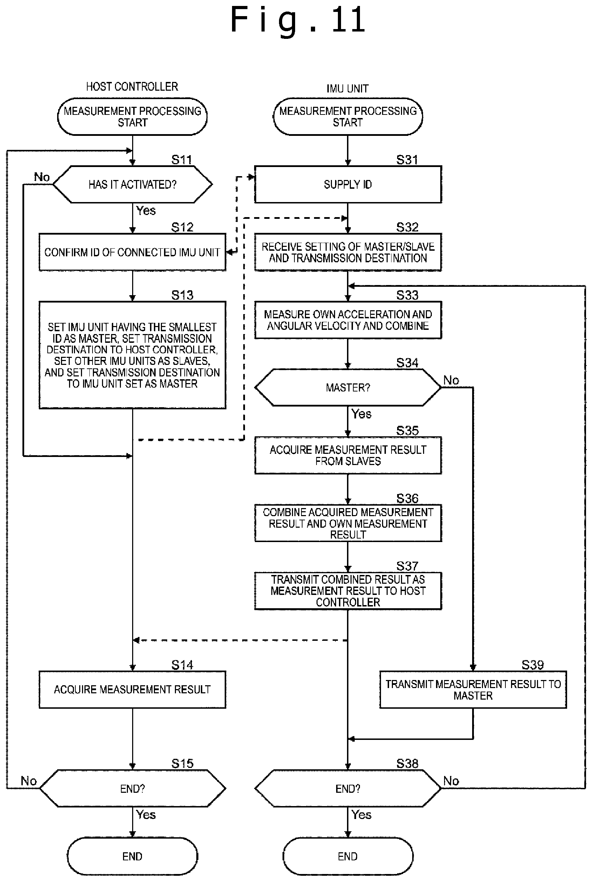

   Fig. 11 is a flowchart for describing measurement processing by the multi-IMU of Fig. 8.
[Fig. 12]

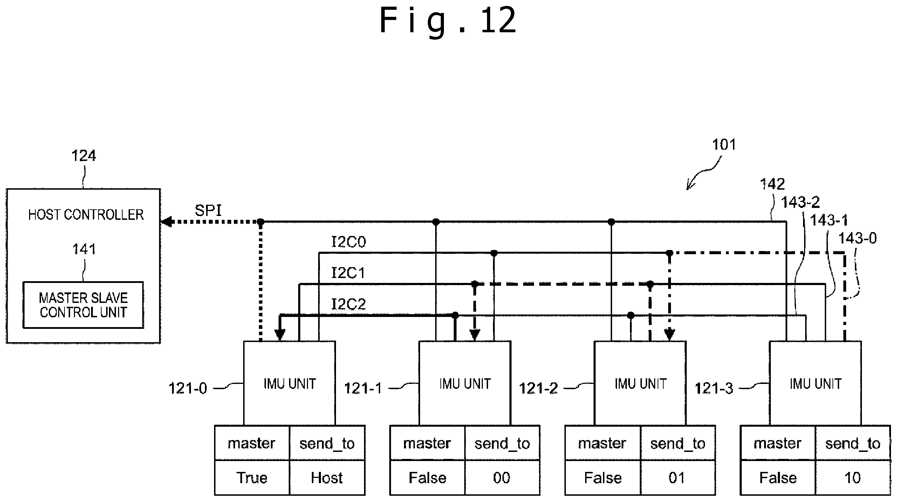

   Fig. 12 is a diagram for describing a first variation of the first embodiment of the multi-IMU of the present disclosure.
[Fig. 13]

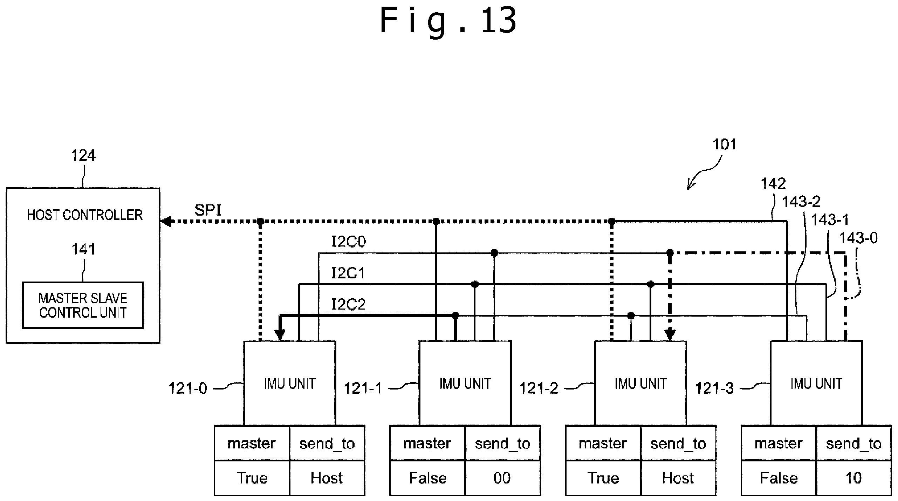

   Fig. 13 is a diagram for describing a second variation of the first embodiment of the multi-IMU of the present disclosure.
[Fig. 14]

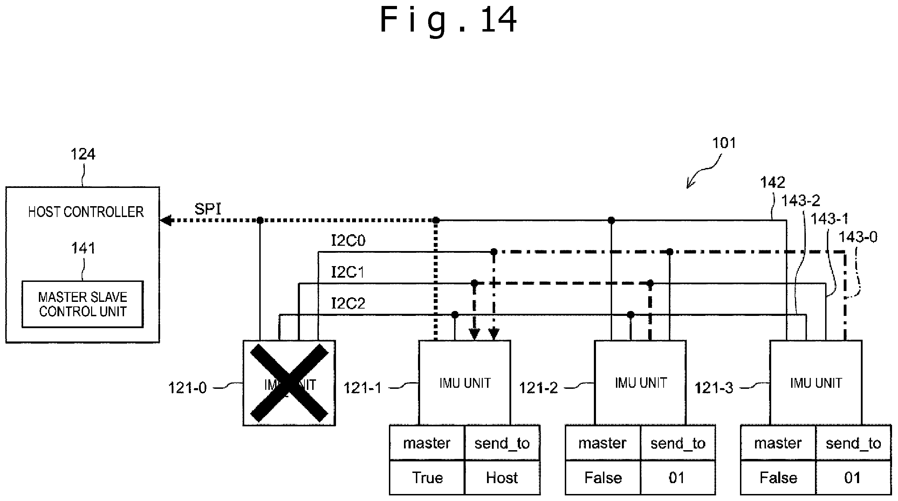

   Fig. 14 is a diagram for describing a first application example of the first embodiment of the multi-IMU of the present disclosure.
[Fig. 15]

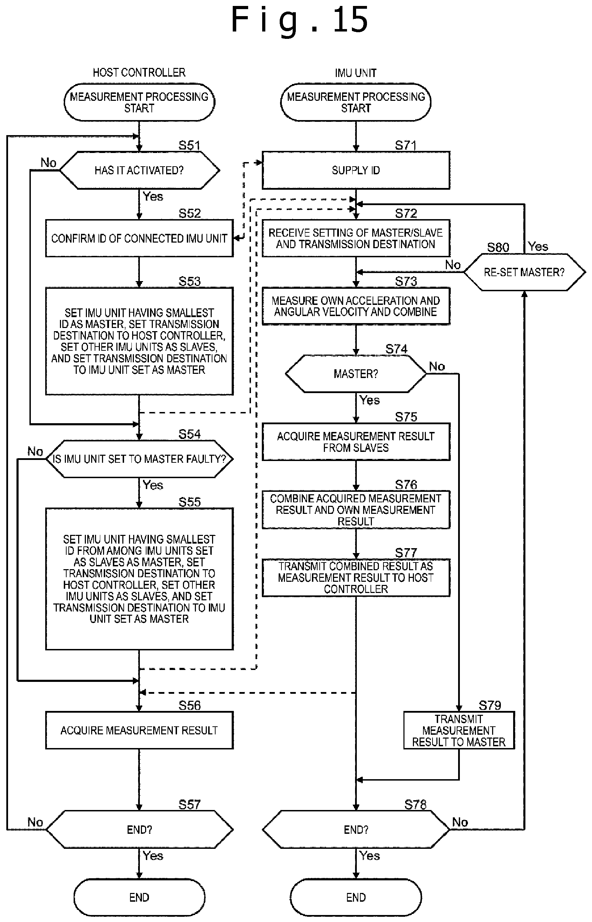

   Fig. 15 is a flowchart for describing measurement processing by the multi-IMU of Fig. 14.
[Fig. 16]

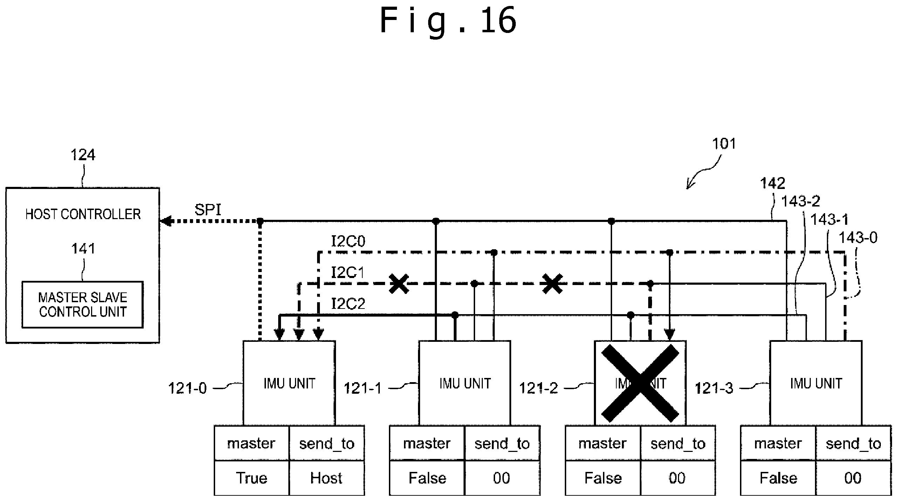

   Fig. 16 is a diagram for describing a second application example of the first embodiment of the multi-IMU of the present disclosure.
[Fig. 17]

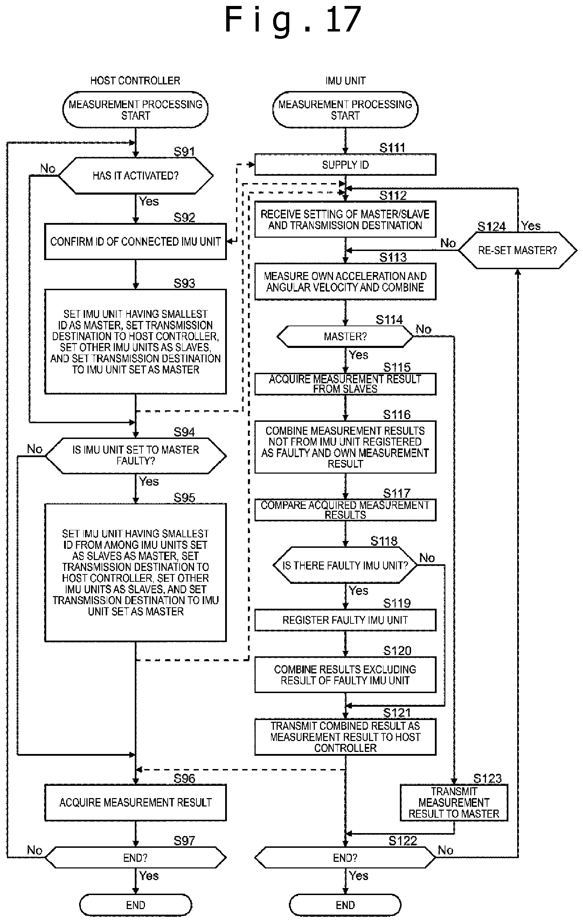

   Fig. 17 is a flowchart for describing measurement processing by the multi-IMU of Fig. 16.
[Fig. 18]

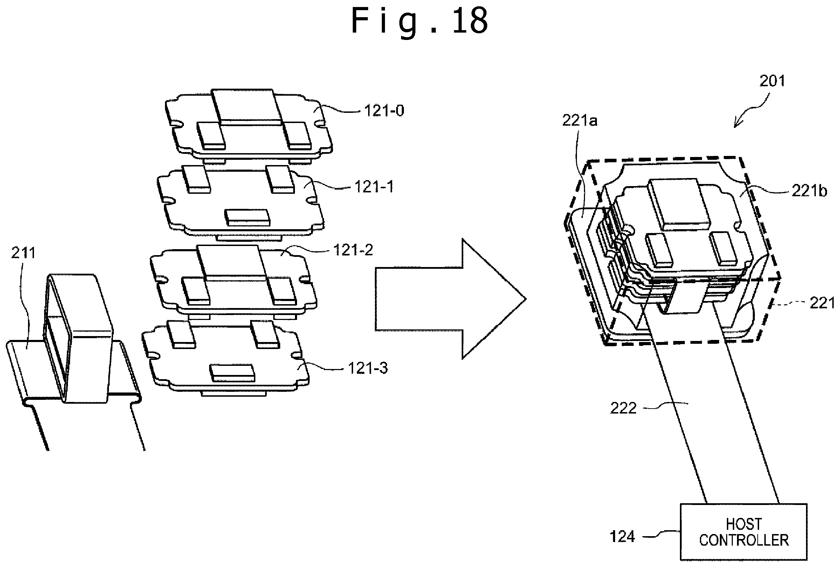

   Fig. 18 is a diagram for describing a configuration example of a second embodiment of a multi-IMU of the present disclosure.
[Fig. 19]

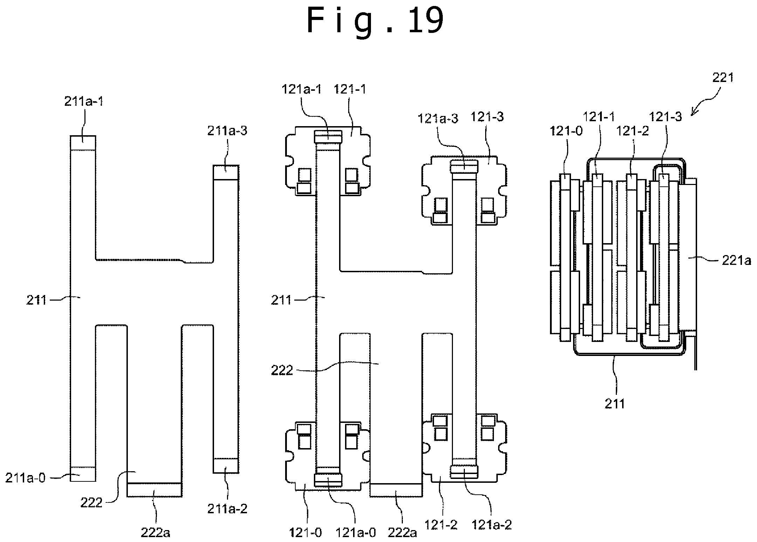

   Fig. 19 is a diagram for describing a configuration example of the second embodiment of the multi-IMU of the present disclosure.
[Fig. 20]

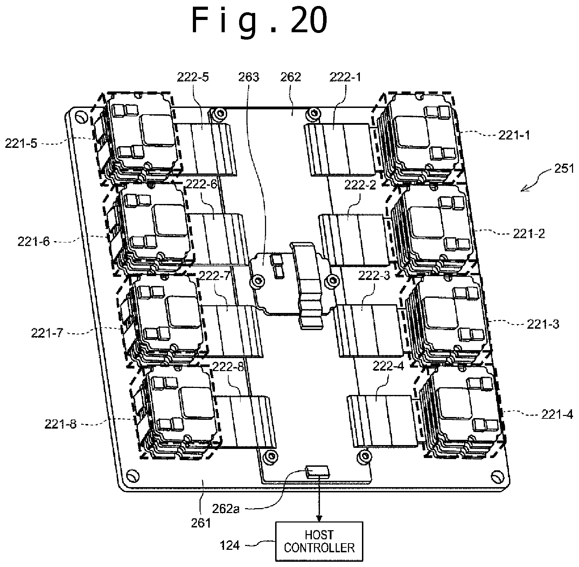

   Fig. 20 is a diagram for describing a configuration example of a third embodiment of a multi-IMU of the present disclosure.
[Fig. 21]

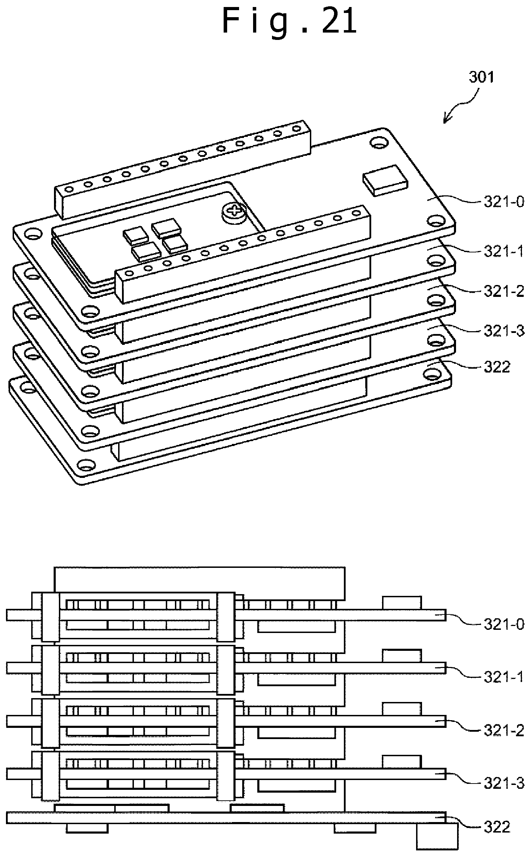

   Fig. 21 is a diagram for describing a configuration example of a fourth embodiment of a multi-IMU of the present disclosure.
[Fig. 22]

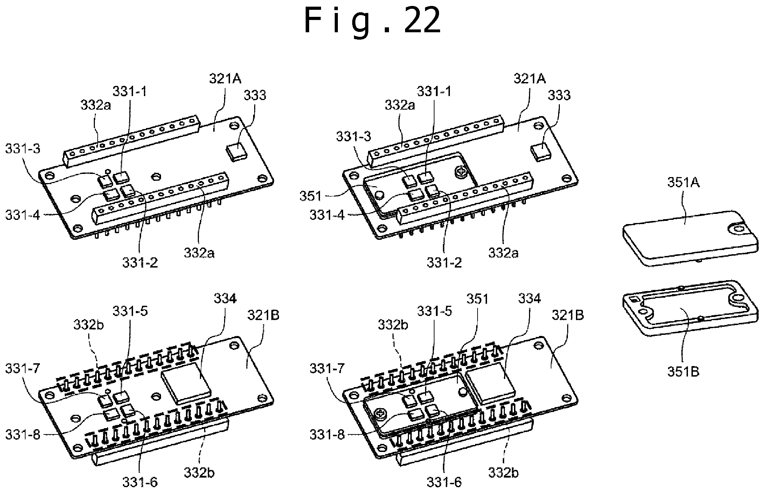

   Fig. 22 is a diagram for describing a configuration example of the fourth embodiment of the multi-IMU of the present disclosure.
[Fig. 23]

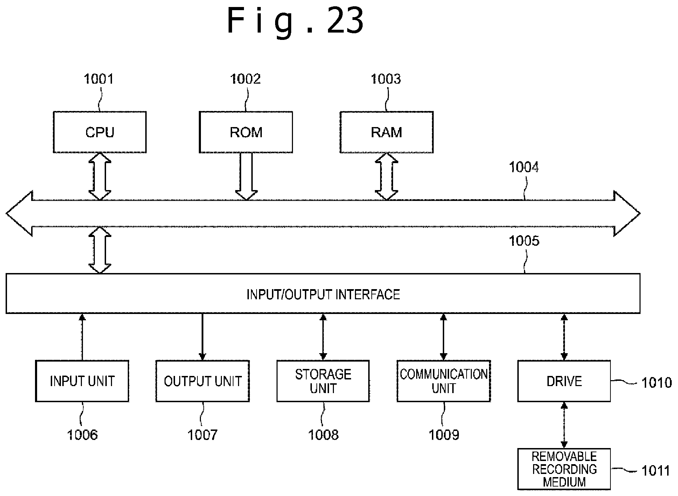

   Fig. 23 is a diagram for describing a configuration example of a general-purpose personal computer.

### Description of Embodiments

Preferred embodiments of the present disclosure will be described in detail below with reference to the accompanying drawings. Note that, in the present specification and the drawings, components having substantially the same functional configuration are denoted by the same reference numeral, and redundant description thereof will be omitted.

Hereinafter, embodiments for implementing the present technology will be described. Description will be made in the following order.
1. Overview of Present Disclosure
2. First Embodiment
3. First Variation of First Embodiment
4. Second Variation of First Embodiment
5. First Application Example of First Embodiment
6. Second Application Example of First Embodiment
7. Second Embodiment
8. Third Embodiment
9. Fourth Embodiment
10. Example of Software Execution

### 1. Overview of Present Disclosure

### Multi-IMU

The present disclosure is particularly directed at measuring acceleration and angular velocity at low cost and with high accuracy by using a plurality of identical multi-inertial measurement units (IMUs).

First, a multi-IMU will be described in an overview of the present disclosure.

As illustrated in the left part of Fig. 1, a single IMU 1 is configured to include, for example, an acceleration sensor that detects acceleration, which is translational motion, in each of three axial directions including XYZ-axes, and a gyro sensor that detects angular velocity, which is rotational movement, and detects acceleration and angular velocity in each of the three axial directions.

With a single IMU 1, though ones with high accuracy exist, the higher the accuracy, the larger and more expensive it is, and when the accuracy is increased, the size and cost are increased.

Thus, as illustrated in the right part of Fig. 1, a high-accuracy multi-IMU 10 is configured such that a plurality of (for example, n) low-accuracy, low-cost IMUs 1 are provided, for example, like IMU 1-1 to IMU 1-n, and a combining unit 2 combines the accelerations and the angular velocities which are the measurement results of the respective IMU 1-1 to IMU 1-n, to reduce the noise density and the bias variation to 1/√n and improve the measurement accuracy.

The device size and the device cost of each of the low-accuracy and low-cost IMU 1-1 to IMU 1-n constituting the multi-IMU 10 illustrated in the right part of Fig. 1 can be sufficiently reduced with respect to the device size and the device cost in the case of preparing the single high-accuracy IMU 1 as illustrated in the left part of Fig. 1, and the cost can be reduced.

Hereinafter, when it is not necessary to distinguish between the IMU 1-1 to the IMU 1-n, IMU 1 is simply used, and this also applies to other configurations. In the present specification described herein, the IMU 1 is a small and low-cost IMU with relatively low accuracy, but the IMU 1 may be a large and high-cost IMU with high accuracy.

### Structure of IMU

Next, the configuration of the IMU 1 will be described with reference to Fig. 2.

As illustrated in the right part of Fig. 2, each IMU 1 constituting the multi-IMU 10 includes, from the top in the drawing, a vibrator 11 made of silicon, a base 12 that fixes the vibrator 11, and a readout circuit 13 that reads the vibration of the vibrator 11 and outputs an angular velocity, and these are bonded in the order illustrated in the right part of Fig. 2 and integrally formed by resin-molding as illustrated in the left part of Fig. 2.

### Circuit Configuration of Readout Circuit

Next, a circuit configuration of the readout circuit 13 in the IMU 1 will be described with reference to Fig. 3.

In Fig. 3, a configuration for detecting the angular rate in the readout circuit constituting the IMU 1 will be described. Since the configuration for detecting the acceleration in the IMU 1 is a configuration in which the wave detection circuit is removed from the configuration for detecting the angular velocity, the configuration for detecting the more complicated angular velocity will be described in a specialized manner.

The readout circuit 13 includes a drive circuit block 31, a sense circuit block 32, and a digital output circuit block 33.

The drive circuit block 31 supplies an oscillation signal having a predetermined drive frequency to the vibrator 11 configured by a Micro Electro Mechanical System (MEMS) and the sense circuit block 32 and causes the vibrator 11 to vibrate on the basis of the oscillation signal.

The sense circuit block 32 detects, as an analog signal, vibration generated in accordance with a Coriolis force acting on the vibrator 11 vibrating on the basis of the oscillation signal and outputs the analog signal to the digital output circuit block 33.

The digital output circuit block 33 converts the vibration generated in accordance with the Coriolis force acting on the vibrator 11, which is supplied from the sense circuit block 32, from an analog signal to a digital signal and outputs the digital signal as angular velocity.

More specifically, the drive circuit block 31 includes an oscillation circuit 51 and an automatic gain adjustment circuit 52.

The oscillation circuit 51 is constituted of an RC, generates an oscillation signal using the vibration supplied from the vibrator 11 as a reference signal, and outputs the oscillation signal to the automatic gain adjustment circuit 52 and a phase shift circuit 72 of the sense circuit block 32.

The automatic gain adjustment circuit 52 adjusts the gain of the oscillation signal having the drive frequency supplied from the oscillation circuit 51 and supplies this to the vibrator 11 to cause the vibrator 11 to vibrate.

The sense circuit block 32 includes a charge amplifier circuit 71, the phase shift circuit 72, a synchronous wave detection circuit 73, and an LPF 74.

The charge amplifier circuit 71 detects the vibration of the vibrator 11 as a vibration signal, amplifies the vibration signal, and supplies the amplified vibration signal to the phase shift circuit 72.

The phase shift circuit 72 adjusts the phase of the vibration signal of the vibrator 11 detected by the charge amplifier circuit 71 on the basis of the oscillation signal supplied by the oscillation circuit 51 and outputs the adjusted signal to the synchronous wave detection circuit 73.

The synchronous wave detection circuit 73 detects a waveform representing the Coriolis force acting on the vibrator 11, which is expressed by an envelope, from the vibration signal of the vibrator 11 with an adjusted phase and outputs the waveform to the LPF 74.

The LPF 74 smoothes the waveform representing the Coriolis force acting on the vibrator 11 and outputs the smoothed waveform to the digital output circuit block 33 as information on the angular velocity including an analog signal.

The digital output circuit block 33 includes an AD conversion circuit 91, a decimation filter 92, and a digital output circuit 93.

The AD conversion circuit 91 converts information of the angular velocity including the Coriolis force acting on the vibrator 11 including an analog signal into a digital signal and outputs the digital signal to the decimation filter 92.

The decimation filter 92 averages the information of the angular velocity including the digital signal and outputs the averaged information to the digital output circuit 93.

The digital output circuit 93 outputs the digitized and averaged information of the angular velocity as a digital signal.

### Operation of IMU

Next, the operation of the IMU 1 will be described with reference to Fig. 4.

As illustrated in the upper left part of Fig. 4, the vibrator 11 vibrates on the basis of a reference signal including an oscillation signal of a drive frequency fb oscillated by the oscillation circuit 51 and having the gain adjusted by the automatic gain adjustment circuit 52.

At this time, when the Coriolis force acts on the vibrator 11, the amplitude modulation by the Coriolis force is applied, and thus, for example, in the waveform output by the charge amplifier circuit 71, amplitude modulation according to the Coriolis force occurs as indicated by waveform fbc with respect to the drive frequency fb.

The synchronous wave detection circuit 73 detects the amplitude modulation by the Coriolis force as the Coriolis force from the envelope of the waveform fbc, that is, the waveform of the analog signal indicating the angular velocity and outputs this to the LPF 74.

The waveform of the analog signal extracted as the Coriolis force in this manner is converted into a digital signal by the digital output circuit block 33 and is output as a digitized angular velocity value.

The multi-IMU collects and integrates n IMUs 1 described above, for example, as illustrated in Fig. 5, and outputs angular velocities detected by the IMUs 1-1 to 1-n with high accuracy by combining the angular velocities via the combining unit 2.

The greater the number of the IMUs 1 to be integrated, the higher the accuracy of the detected angular velocity.

Accordingly, the present disclosure realizes a multi-IMU with high accuracy by using a plurality of the multi-IMUs 10 themselves.

At this time, by setting any one of the plurality of multi-IMUs 10 as a master and setting the other multi-IMUs 10 as slaves, for example, the multi-IMU 10 set as the slave transmits the measurement result to the multi-IMU 10 serving as the master. Then, the multi-IMU 10 serving as the master combines the measurement results from the multi-IMU 10 serving as the slave, including the measurement result of the multi-IMU 10 serving as the master, and outputs the combined measurement result.

In this manner, even when the plurality of multi-IMUs 10 are provided, the measurement result of the angular velocities to be output can be handled as if it is output from one multi-IMU 10.

Further, since the plurality of multi-IMUs 10 can use the same configuration, the cost for manufacturing the multi-IMUs 10 can be reduced.

As a result, it is possible to realize the multi-IMU 10 with high accuracy at a low cost.

### 2. First Embodiment

### Configuration Example of Multi-IMU of Present Disclosure

Next, an external configuration of the multi-IMU of the present disclosure will be described with reference to Fig. 6.

The multi-IMU of the present disclosure is realized by connecting a plurality of IMU units each including the above-described multi-IMU 10 and IMU 1.

Thus, hereinafter, the configuration corresponding to the multi-IMU 10 and the IMU 1 described above is referred to as an IMU unit and is distinguished in expression from the multi-IMU of the present disclosure.

In the following description, only the configuration corresponding to the above-described multi-IMU 10 will be used as the IMU unit. However, this is for the sake of simplicity, and it goes without saying that the IMU unit may be the IMU 1. Further, the multi-IMU of the present disclosure is configured by the plurality of multi-IMUs 10 and thus can be regarded as a multi-IMU system.

Fig. 6 is a top view of the multi-IMU 101 of the present disclosure. The multi-IMU 101 of the present disclosure includes a substrate 111, IMU units 121-0 to 121-3, cables 122-0 to 122-4, an integrated substrate 123, and a host controller 124.

The IMU units 121-0 to 121-3 have a configuration corresponding to the above-described multi-IMU 10, each including eight IMUs 131-1 to 131-8 (Fig. 7), and are bonded to four corners on the substrate 111.

The IMU units 121-0 to 121-3 are connected to the integrated substrate 123 and the cables 122-0 to 122-3 connected to terminals 121a-0 to 121a-3, respectively.

The integrated substrate 123 is bonded to a central portion of the substrate 111 and is electrically connected to the cables 122-0 to 122-3 connected to terminals 123a-0 to 123a-3.

The integrated substrate 123 is electrically connected to the host controller 124 via a cable 122-4 connected to a terminal 123a-4.

The integrated substrate 123 integrates and electrically connects the IMU units 121-0 to 121-3 and the host controller 124 via the cables 122-0 to 122-4.

### Configuration Example of IMU Unit

Next, a configuration example of an IMU unit 121 will be described with reference to Fig. 7. Note that an IMU unit 121A in the left part of Fig. 7 illustrates the configuration of the back surface side of the IMU unit 121 of Fig. 6, and an IMU unit 121B in the right part of Fig. 7 illustrates the configuration of the front surface side of the IMU unit 121 of Fig. 6.

The IMU unit 121 is provided with the terminal 121a and the IMUs 131-1 to 131-4 on the front surface side of a substrate 130 and is provided with the IMUs 131-5 to 131-8 and a control unit 132 on the back surface side.

The IMU 131-1 to the IMU 131-8 are components corresponding to the above-described IMU 1. That is, the IMU unit 121 in Figs. 6 and 7 is provided with a total of eight IMUs 131-1 to 131-8.

In the example illustrated, eight IMUs 131 are provided for one IMU unit 121, but the number of the IMUs 131 is not limited thereto. Another number may be used, and the number may be any number as long as the number is one or more.

The control unit 132 is controlled by the host controller 124, and any one of the four IMU units 121-0 to 121-3 in Fig. 6 is set as a master, and the remaining units are set as slaves.

When the control unit 132 is set as the slave, the control unit 132 combines the information of the angular velocities and the accelerations which are the measurement results from the IMU 131-1 to IMU 131-8 and outputs the information to the IMU unit 121 set as the master.

When the control unit 132 is set as the master, the control unit 132 combines the information of the angular velocities and the accelerations as the measurement results from the IMU 131-1 to 131-8, combines the results from the IMU units 121 set as the slaves, and outputs the combined result to the host controller 124.

The term "combine information" as used herein refers to the processing executed by the combining unit 2. Thus, when the IMU unit 121 is set as the slave, the IMU unit 121 combines the information of the angular velocities and the accelerations of the IMU 131-1 to IMU 131-8 and outputs the information to the IMU unit 121 set as the master.

Also, when the IMU unit 121 is set as the master, the IMU unit 121 combines the information of the angular velocities and the accelerations as the measurement results from the IMU 131-1 to 131-8, combines the results from the IMU units 121 set as the slaves, and outputs the combined result to the host controller 124 as the measurement result.

The functions realized by the IMU unit 121 will be described in detail later with reference to Fig. 8.

In addition, although an example in which the number of the IMU units 121 is four is illustrated in Fig. 6, the number is not limited in terms of realizing the multi-IMU 101 and may be a number other than four. As described above, since the measurement accuracy is improved as the number of the IMUs 131 corresponding to the IMU 1 is increased, it is desirable to connect a larger number of the IMU units 121 in a case where higher accuracy is required.

However, since the cost increases with the number of the IMU units 121, there is a trade-off between the required accuracy and the cost. However, since the IMU unit 121 may be formed by using a plurality of the same mass-produced configuration, even if a larger number of the IMU units 121 is required, the cost related to the manufacturing can be reduced.

As described above, the IMU unit 121 is the multi-IMU 10 itself and, as described with reference to Fig. 7, has a configuration in which eight IMUs 131 and the control unit 132 are provided on one substrate 130. Thus, it can be said that the IMU unit 121 constitutes the multi-IMU chip.

### Function Realized by IMU Unit

Next, functions implemented by the IMU unit 101 of Fig. 6 will be described with reference to a functional block diagram of Fig. 8.

The functions of the multi-IMU 101 are realized by the IMU units 121-0 to 121-3 and the host controller 124.

The host controller 124 and the IMU units 121-0 to 121-3 are connected to each other via an SPI bus 142 that realizes serial peripheral interface (SPI) communication.

The IMU units 121-0 to 121-3 are connected to each other by three I2C buses 143-0 to 143-2 for realizing Inter Integrated Circuits (I2C) (registered trademark) communication.

In Fig. 8, the I2C buses 143-0 to 143-2 are also illustrated as I2C0 to I2C2, respectively. The I2C buses 143-0 to 143-2 may be other buses as long as they have the same function, and may be, for example, an I3C (Improved Inter Integrated Circuits) (registered trademark) bus implemented by extending the I2C bus. Since the I3C bus is capable of performing communication at a higher speed than I2C, the use of I3C instead of I2C enables the processing to be performed at a higher speed.

In Fig. 8, the host controller 124 and the IMU units 121-0 to 121-3 are not connected to each other via the I2C bus 143, but may be connected to each other via the I2C bus 143 in addition to the SPI bus 142.

Further, the communication path realized by the SPI bus 142 and the I2C buses 143-0 to 143-2 may be realized by other configurations as long as similar communication is possible, and for example, may be connected by wired communication or other communication methods or may be connected by wireless communication.

The host controller 124 is provided with the master slave control unit 141. The master slave control unit 141 sets any one of the IMU units 121-0 to 121-3 as a master and sets the other IMU units as slaves by communicating with the IMU units 121-0 to 121-3 via the SPI bus 142.

The master slave control unit 141 acquires the respective IDs by communicating with the IMU units 121-0 to 121-3 via the SPI bus 142, for example, and sets the IMU unit 121 having the smallest ID value as the master and the other IMU units as the slaves.

The master slave control unit 141 sets the IMU unit 121 set as the master as a transmission destination of the measurement results for the IMU units 121 set as the slaves and sets the host controller 124 as a transmission destination for the IMU unit 121 set as the master.

The IMU units 121 set as the slaves transmit their own measurement results to the IMU unit 121 set as the master, which is a transmission destination, via the I2C buses 143-0 to 143-2.

The IMU unit 121 set as the master acquires the measurement results from the IMU units 121 set as the slaves via the I2C buses 143-0 to 143-2, combines all of the measurement results including its own measurement result, and transmits the combined measurement results to the host controller 124, which is the transmission destination, via the SPI bus 142.

### Function Realized by IMU Unit

Next, functions implemented by the IMU unit 121 will be described with reference to Fig. 9.

The functions of the IMU unit 121 are realized by the IMU 131 and control unit 132. In Fig. 9, the IMU 131 is expressed as 1 to N, but in the case of a configuration corresponding to the IMU unit 121 in Fig. 7, N = 8. Here, an example in which the number of the IMUs 131 is eight is described, but the number of the IMUs 131 is not limited, and thus the IMU 131 is denoted as "1 to N".

The control unit 132 includes a master slave management unit 151, a transmission destination control unit 152, a self-combining unit 153, an other unit-combining unit 154, a transmission unit 155, and the ID storage unit 156.

The master slave management unit 151 stores and manages the setting content of either the master or the slave set by the master slave control unit 141 of the host controller 124.

The transmission destination control unit 152 controls the transmission destination of its own measurement result set by the master slave control unit 141 of the host controller 124, sets the transmission destination to the host controller 124 when itself is set as the master, and sets the transmission destination to the IMU unit 121 set as the master when itself is set as the slave.

The self-combining unit 153 and the other unit-combining unit 154 operate according to the setting of the master or the slave. When the master slave management unit 151 is set as a slave, the self-combining unit 153 combines the measurement results of the IMU 131-1 to IMU 131-8 provided in its IMU unit 121 and generates a self-combined value. The transmission unit 155 transmits the self-combined value as a measurement result to the IMU unit 121 set as the master, which is the transmission destination, via the I2C bus 143. In this case, the other unit-combining unit 154 does not function.

Also, when the master slave management unit 151 is set as a master, the self-combining unit 153 combines the measurement results of the IMU 131-1 to IMU 131-8 provided in its IMU unit 121 and generates a self-combined value. Further, the other unit-combining unit 154 acquires the measurement results from the IMU units 121 set as the slaves via the I2C bus 143 and combines the measurement result with the self-combined value combined by the self-combining unit 153 to generate a self and other combined value. The transmission unit 155 transmits the self and other combined value as the measurement result to the host controller 124, which is the transmission destination, via the SPI bus 142.

The ID storage unit 156 stores an ID for identifying the IMU unit 121 and supplies the stored ID when the master slave control unit 141 of the host controller 124 requests the IMU unit 121 for the ID when the multi-IMU 101 is activated. The master slave control unit 141 sets which of the IMU units 121 is to be the master and which is to be the slave on the basis of the IDs acquired in this manner.

### Example of Setting of Master and Slave

Next, an example of setting the master and the slave for the multi-IMU 101 will be described with reference to Fig. 10.

The master slave control unit 141 of the host controller 124 communicates with the IMU units 121-0 to 121-3 via the SPI bus 142 and acquires the respective IDs, for example, when the multi-IMU 101 is activated.

The master slave control unit 141 sets, for example, the IMU unit having the smallest ID as the master on the basis of the acquired IDs of the IMU units 121-0 to 121-3. In the case of Fig. 10, it is assumed that the ID of each of the IMU units 121-0 to 121-3 is 00, 01, 10, and 11.

In this case, the master slave control unit 141 sets the IMU unit 121-0 having the smallest ID = 00 as a master and sets the other IMU units 121-1 to 121-3 as slaves.

Then, the master slave control unit 141 sets the transmission destination of the measurement results of the IMU units 121-1 to 121-3 set as the slaves to the ID of the IMU unit 121-0 set as the master and sets the transmission destination of the measurement result of the IMU unit 121-0 set as the master to the host controller 124.

More specifically, in Fig. 10, the setting information (master) of the master or the slave managed by the master slave management unit 151 is displayed in the lower left part of the IMU units 121-0 to 121-3, and the information (send to) of the transmission destination set in the transmission destination control unit 152 is displayed in the lower right part.

That is, in the IMU unit 121-0 set as the master, True, indicating that the IMU unit is set as the master, is set as the master or slave setting information (master) managed by the master slave management unit 151. Further, as information (send to) stored in the transmission destination control unit 152, Host, indicating that the transmission destination is the host controller, is set.

Also, in the IMU units 121-1 to 121-3 set as the slaves, False, indicating that the IMU units are set as the slaves, is set as the master or slave setting information (master) managed by the master slave management unit 151. Further, as information (send to) stored in the transmission destination control unit 152, ID = 00 indicating that the transmission destination is the IMU unit 121-0 set as the master is set.

With such settings, the IMU unit 121-1 set as the slave outputs a self-combined value, as its own measurement result, to the IMU unit 121-0 set as the master via the I2C bus (I2C2) 143-2 as indicated by a thick solid line arrow in Fig. 10.

Also, the IMU unit 121-2 set as the slave outputs a self-combined value, as its own measurement result, to the IMU unit 121-0 set as the master via the I2C bus (I2C1) 143-1 as indicated by a thick dashed line arrow in Fig. 10.

Further, the IMU unit 121-3 set as the slave outputs a self-combined value, as its own measurement result, to the IMU unit 121-0 set as the master via the I2C bus (I2C0) 143-0 as indicated by a thick dot-dash line arrow in Fig. 10.

Then, as indicated by the thick dotted line arrow in Fig. 10, the IMU unit 121-0 set as the master acquires the measurement results supplied from the IMU units 121-1 to 121-3 set as the slaves via the I2C buses 143-2 to 143-0, and combines all the measurement results together with the self-combined value, which is its own measurement result, to generate the self and other combined value. The transmission unit 155 outputs the self and other combined value as the measurement result to the host controller 124 via the SPI bus 142.

With such settings, the host controller 124 can acquire highly accurate information of the acceleration and angular velocity only by setting any one of the IMU units 121-0 to 121-3 as a master and setting the others as slaves only when the multi-IMU 101 is activated, and only by acquiring the measurement results by the plurality of IMU units 121-0 to 121-3 from the IMU unit 121 set as a master.

As a result, even if the number of IMU units 121 is increased, the host controller 124 only needs to determine the master/slave first and only needs to acquire one measurement result supplied from the IMU unit 121 set as the master, and thus it is possible to reduce the processing load.

Further, the accuracy can be improved as the number of IMU units 121 is increased.

Further, since it is only necessary to increase the number of the same IMU units 121 by mass production, it is possible to reduce the cost, making it possible to realize the multi-IMU 101 with high accuracy at a low cost.

### Measurement Processing by Multi-IMU in Fig. 8

Next, measurement processing by the multi-IMU 101 of Fig. 8 will be described with reference to a flowchart of Fig. 11. In the flowchart of Fig. 11, the left part illustrates the processing of the host controller, and the right part illustrates the processing of the IMU unit 121.

In step S11, the master slave control unit 141 of the host controller 124 determines whether or not the multi-IMU 101 has been activated.

In step S11, if it is determined that the multi-IMU 101 has been activated, the processing proceeds to step S12.

In step S12, the master slave control unit 141 communicates with the IMU units 121-0 to 121-3 via the SPI bus 142 and acquires the respective IDs.

At this time, in step S31, the ID storage unit 156 in the control unit 132 of the IMU unit 121 supplies the stored IDs to the master slave control unit 141 of the host controller 124.

In step S13, the master slave control unit 141 sets the IMU unit 121 having the smallest ID as the master and sets the other IMU units 121 as slaves on the basis of the acquired IDs of the IMU units 121-0 to 121-3. At this time, the master slave control unit 141 sets the host controller 124 as the transmission destination of the master and sets the IMU unit 121 of the master as the transmission destination of the slaves.

Since it is sufficient to set any of the IMU units 121-0 to 121-3 as the master on the basis of the ID, and the IMU unit having the smallest ID may be set, the IMU unit having the largest ID may be set, or any one of the IMU units may be selected at random.

By this processing, in step S32, the master slave management unit 151 in the control unit 132 of the IMU unit 121 receives the setting content by the master slave control unit 141 and stores the setting information of the master or the slave. The transmission destination control unit 152 receives the setting content by the master slave control unit 141, sets the transmission destination as the host controller 124 in the case of the master, sets the transmission destination as the IMU unit 121 set as the master in the case of the slave, and stores the setting content.

In addition, in step S11, if it is determined that the multi-IMU 101 is not activated or is already activated, the processing of steps S12 and S13 is skipped.

In step S33, the self-combining unit 153 acquires information on the acceleration and angular velocity as the measurement results of IMU 131-1 to IMU 131-8, combines the information, and generates a self-combined value as its measurement result.

In step S34, the master slave management unit 151 determines whether or not itself is set to the master.

In step S34, if it is determined that it is not the master, that is, that it is a slave, the processing proceeds to step S39.

In step S39, the transmission unit 155 transmits the measurement result including the self-combined value to the IMU unit 121 set as the master, which is set in the transmission destination control unit 152, via the I2C bus 143.

On the other hand, in step S33, if it is determined that it is the master, the processing proceeds to step S35.

In step S35, the other unit-combining unit 154 acquires the measurement results transmitted from the other IMU units 121 set as the slaves via the I2C bus 143.

In step S36, the other unit-combining unit 154 combines the measurement results transmitted from the other IMU units 121 set as the acquired slaves via the I2C bus 143 and the self-combined value, which is its own measurement result, and generates the self and other combined value.

In step S37, the transmission unit 155 transmits the self and other combined value including all of the combined results as the measurement result to the host controllers 124 set in the transmission destination control unit 152 via the SPI bus 142.

In step S14, the host controller 124 acquires the measurement result transmitted from the IMU unit 121 set as the master via the SPI bus 142.

In steps S15 and S38, it is determined whether an instruction to end the processing is performed, and if an end instruction is not performed, the processing returns to steps S11 and S33, and the subsequent processing is repeated.

Then, in steps S15 and S38, if the instruction to end the processing is performed, the processing ends.

According to the processing described above, the host controller 124 can acquire highly accurate information of the acceleration and angular velocity only by setting any one of the IMU units 121-0 to 121-3 as a master and setting the others as slaves only when the multi-IMU 101 is activated, and only by acquiring the measurement results by the plurality of IMU units 121-0 to 121-3 from the IMU unit 121 set as a master.

As a result, even if the number of IMU units 121 is increased, the host controller 124 only needs to determine the master/slave first and only needs to acquire one measurement result supplied from the IMU unit 121 set as the master, and thus it is possible to reduce the processing load.

Further, the accuracy can be improved as the number of IMU units 121 is increased.

Further, since it is only necessary to increase the number of the same IMU units 121 by mass production, it is possible to reduce the cost, making it possible to realize the multi-IMU 101 with high accuracy at a low cost.

### 3. First Variation of First Embodiment

In the example described above, the IMU units 121 set as the slaves directly transmit the respective measurement results to the IMU unit 121 set as the master via the I2C bus 143.

However, the IMU units 121 set as the slaves may be set to transmit to the IMU unit 121 set as the master in a sequential relay format.

That is, for example, as illustrated in Fig. 12, consider a case where the IMU unit 121-0 is set as the master and the IMU units 121-1 to 121-3 are set as the slaves.

In this case, the self-combining unit 153 of the IMU unit 121-3 generates a self-combined value which is its own measurement result. The transmission unit 155 transmits this to the IMU unit 121-2 set as the slave via the I2C bus (I2C0) 143-0 as indicated by the thick dot-dash line arrow in Fig. 12.

Further, when the other unit-combining unit 154 of the IMU unit 121-2 acquires the measurement result from the IMU unit 121-3, it combines it with the self-combined value which is its own measurement value obtained by combining with the self-combining unit 153 and generates the self and other combined value. As indicated by the thick dashed line arrow in Fig. 12, the transmission unit 155 transmits the self and other combined value as the measurement result to the IMU unit 121-1 set as the slave via the I2C bus (I2C1) 143-1.

Further, when the other unit-combining unit 154 of the IMU unit 121-1 acquires the measurement result from the IMU unit 121-2, it combines it with the self-combined value which is its own measurement result obtained by combining with the self-combining unit 153 and generates the self and other combined value. As indicated by the thick solid line arrow in Fig. 12, the transmission unit 155 transmits the self and other combined value as the measurement result to the IMU unit 121-0 set as the master via the I2C bus (I2C2) 143-2.

Then, the other unit-combining unit 154 of the IMU unit 121-0 set as the master acquires the measurement result supplied from the IMU unit 121-1 set as the slave via the I2C bus 143-2 and combines this with the self-combined value which is its own measurement result obtaining by combining with the self-combining unit 153 to generate the self and other combined value. As indicated by the thick dotted line arrow in Fig. 12, the transmission unit 155 transmits the self and other combined value as the measurement result to the host controller 124 via the SPI bus 142 as the measurement result.

At this time, in the IMU unit 121-0 set as the master, True, indicating that the IMU unit is set as the master, is set as the information (master) managed by the master slave management unit 151. Further, as information (send to) stored in the transmission destination control unit 152, Host, indicating that the transmission destination is the host controller, is set.

Also, in the IMU unit 121-3 set as the slave, False, indicating that the IMU unit is set as the slave, is set as the information (master) managed by the master slave management unit 151. Further, as information (send to) stored in the transmission destination control unit 152, ID = 10 indicating that the transmission destination is the IMU unit 121-2 is set.

Also, in the IMU unit 121-2 set as the slave, False, indicating that the IMU unit is set as the slave, is set as the information (master) managed by the master slave management unit 151. Further, as information (send to) stored in the transmission destination control unit 152, ID = 01 indicating that the transmission destination is the IMU unit 121-1 is set.

Also, in the IMU unit 121-1 set as the slave, False, indicating that the IMU unit is set as the slave, is set as the information (master) managed by the master slave management unit 151. Further, as information (send to) stored in the transmission destination control unit 152, ID = 00 indicating that the transmission destination is the IMU unit 121-0 is set.

The method of transmitting the measurement results from the IMU units 121 set as the slaves to the IMU unit 121 set as the master as illustrated in Figs. 10 and 12 may be selected by the master slave control unit 141 according to a user request.

Further, in the example illustrated in Fig. 12, the IMU units 121 set as the slaves transmit the measurement results in a relay format via the different I2C buses 143. However, some of the IMU units may transmit the measurement results in a relay format via the same I2C bus 143 or all of the IMU units may transmit the measurement results via the same I2C bus 143.

For example, the transmission unit 155 of the IMU unit 121-3 and the IMU unit 121-2 may transmit the respective measurement results to the IMU units 121-2 and 121-1 via the I2C bus (I2C0) 143-0, and the transmission unit 155 of the IMU unit 121-1 may transmit the measurement result to the IMU unit 121-0 via the I2C bus (I2C2) 143-2.

Further, for example, the transmission unit 155 of the IMU unit 121-3 and the IMU units 121-2 and 121-1 may transmit the measurement results to the IMU units 121-2 to 121-0 via the I2C bus (I2C1) 143-1.

Which I2C bus 143 is used for the IMU unit 121 set as the slave to transmit the measurement result may be set by the master slave control unit 141 according to a user request, for example.

### 4. Second Variation of First Embodiment

In the example described above, one of the plurality of IMU units 121 is set as the master. However, a plurality of IMU units 121 may be set as the master.

That is, for example, as illustrated in Fig. 13, the IMU units 121-0 and 121-2 may be set as masters, and the IMU units 121-1 and 121-3 may be set as slaves corresponding to the respective masters.

In this case, the transmission unit 155 of the IMU unit 121-3 generates a self-combined value which is its own measurement result. The transmission unit 155 transmits this to the IMU unit 121-2 set as the master via the I2C bus (I2C0) 143-0 as indicated by the thick dot-dash line arrow in Fig. 13.

Then, the other unit-combining unit 154 of the IMU unit 121-2 set as the master acquires the measurement result supplied from the IMU unit 121-3 set as its slave via the I2C bus 143-0 and combines this with its own measurement result obtaining by combining with the self-combining unit 153 to generate the self and other combined value. As indicated by the thick dotted line arrow in Fig. 13, the transmission unit 155 transmits the self and other combined value to the host controller 124 via the SPI bus 142 as the measurement result.

Also, the self-combining unit 153 of the IMU unit 121-1 generates a self-combined value which is its own measurement result. As indicated by the thick solid line arrow in Fig. 13, the transmission unit 155 transmits the self-combined value as the measurement result to the IMU unit 121-1 set as the master via the I2C bus (I2C2) 143-2.

Then, the other unit-combining unit 154 of the IMU unit 121-0 set as the master acquires the measurement result supplied from the IMU unit 121-1 set as its slave via the I2C bus 143-2 and combines this with its own measurement result obtaining by combining with the self-combining unit 153 to generate the self and other combined value. As indicated by the thick dotted line arrow in Fig. 13, the transmission unit 155 transmits the self and other combined value to the host controller 124 via the SPI bus 142 as the measurement result.

At this time, in the IMU unit 121-0 set as the master, True, indicating that the IMU unit is set as the master, is set as the information (master) managed by the master slave management unit 151. Further, as information (send to) stored in the transmission destination control unit 152, Host, indicating that the transmission destination is the host controller, is set.

Also, in the IMU unit 121-1 set as the slave, False, indicating that the IMU unit is set as the slave, is set as the information (master) managed by the master slave management unit 151. Further, as information (send to) stored in the transmission destination control unit 152, ID = 00 indicating that the transmission destination is the IMU unit 121-0 is set.

Also, in the IMU unit 121-2 set as the master, True, indicating that the IMU unit is set as the master, is set as the information (master) managed by the master slave management unit 151. Further, as information (send to) stored in the transmission destination control unit 152, Host, indicating that the transmission destination is the host controller, is set.

Also, in the IMU unit 121-3 set as the slave, False, indicating that the IMU unit is set as the slave, is set as the information (master) managed by the master slave management unit 151. Further, as information (send to) stored in the transmission destination control unit 152, ID = 10 indicating that the transmission destination is the IMU unit 121-2 is set.

With the setting as illustrated in Fig. 13, the redundancy is increased by supplying the measurement results from the two IMU units 121-0 and 121-2 set as the masters to the host controller 124, but the measurement accuracy is reduced.

However, even in a situation such as when a fault occurs in the IMU unit 121 set as one of the masters, the measurement result of the other master can be acquired. Thus, the reliability in terms of acquiring the measurement result can be improved.

In particular, the multi-IMU 101 may be used in a situation such as in outer space, smart farming, automated driving, or the like in which if the measurement result is interrupted even for a moment, there is a possibility of a fatal fault or a human life being affected. In such a case, it is necessary to increase redundancy reliability.

For example, in a case where the multi-IMU 101 is used in outer space, even if a fault occurs once, the multi-IMU 101 cannot be repaired or replaced, and thus high redundancy reliability is required.

In such a case where the multi-IMU 101 is expected to be used in an extreme situation that requires high redundancy reliability, when a plurality of the IMU units 121 are provided, a plurality of masters according to the required redundancy reliability may be set.

Further, the number of masters can be changed to match the redundancy reliability required in accordance with the situation where the multi-IMU 101 is used. Thus, the expandability can be improved.

The method of transmitting the measurement results from the IMU units 121 set as the slaves to the IMU unit 121 set as the master as illustrated in Fig. 13 may be selected by the master slave control unit 141 according to a user request.

In the case of settings such as those illustrated in Fig. 13, for example, the transmission unit 155 of the IMU units 121-3 and 121-1 may transmit the self-combined values as the measurement results to the IMU units 121-2 and 121-0 via any of the I2C buses 143-0 to 143-2.

Which I2C bus 143 is used for the IMU unit 121 set as the slave to transmit the measurement result may be selected by the master slave control unit 141 according to a user request, for example.

### 5. First Application Example of First Embodiment

In the example described above, the host controller 124 sets any one of the plurality of IMU units 121 as a master and the others as slaves, the measurement results of the IMU units 121 set as the slaves are supplied to the master, and the master combines these with its own measurement results and outputs the combined result.

However, in this case, if a fault occurs in the IMU unit 121 set as the master, the measurement result is not supplied to the host controller 124.

Thus, in a case where the measurement result is not transmitted from the IMU unit 121 set as the master, the master slave control unit 141 may determine that a fault has occurred and may continue the output of the measurement result by setting one of the IMU units 121 set as the slaves as a master instead.

That is, for example, as illustrated in Fig. 14, in a case where the IMU unit 121-0 is set as the master and the IMU units 121-1 to 121-3 are set as the slaves and a fault occurs in the IMU unit 121-0, the host controller 124 is put in a state where the measurement result cannot be acquired from the IMU unit 121-0.

In such a case, the master slave control unit 141 sets, for example, the IMU unit 121-1 having the smallest ID among the IMU units 121-1 to 121-3 as the master and sets the IMU units 121-2 and 121-3 as the slaves, as in the state at the time of activation.

With such setting, as indicated by a thick dashed line arrow in Fig. 14, the IMU unit 121-2 set as the slave transmits its own measurement result to the IMU unit 121-1 set as the master via the I2C bus (I2C1) 143-1.

Also, as indicated by a thick dot-dash line arrow in Fig. 14, the IMU unit 121-3 set as the slave transmits its own measurement result to the IMU unit 121-1 set as the master via the I2C bus (I2C2) 143-2.

Then, as indicated by the thick dotted line arrow in Fig. 14, the IMU unit 121-1 set as the master acquires the measurement results supplied from the IMU units 121-2 and 121-3 set as the slaves via the I2C buses 143-1 and 143-0, combines all the measurement results together with the self-combined value, which is its own measurement result, to generate the self and other combined value, and outputs this as the measurement result to the host controller 124 via the SPI bus 142.

That is, in a case where the measurement result cannot be acquired from the IMU unit 121 set as the master, the master slave control unit 141 of the host controller 124 sets a substitute master from among the IMU units 121 set as the slaves and re-sets the other IMU units as the slaves.

Accordingly, at the time when the measurement result cannot be acquired from the IMU unit 121 set as the master, the IMU unit 121 set as the master is determined to be faulty. Then, one of the IMU units 121 set as the slaves until then is set as the substitute master, and the other IMU units 121 are set as slaves, so that the measurement result can be acquired again.

As a result, it is possible to realize the multi-IMU 101 with high accuracy and high fault tolerance at a low cost.

### Measurement Processing by Multi-IMU of First Application Example of First Embodiment

Next, the measurement processing by the multi-IMU of a first application example according to the first embodiment will be described with reference to a flowchart of Fig. 15.

Note that the processing of steps S51 to S53, S56, S57, and S71 to S79 in the flowchart of Fig. 15 is similar to the processing of steps S11 to S15 and S31 to S39 in the flowchart of Fig. 11, and thus description thereof will be omitted.

That is, when the multi-IMU 101 is activated, one of the plurality of IMU units 121 is set as the master, and the others are set as the slaves. Then, the IMU units 121 set as the slaves supply the measurement results to the IMU unit 121 set as the master, and the IMU unit 121 set as the master combines the measurement results from the IMU units 121 set as the slaves and the self-combined value, which is its own measurement result, to generate the self and other combined value, and transmits the self and other combined value to the host controller 124 as the measurement result.

In step S54, the master slave control unit 141 determines whether or not the IMU unit 121 set as the master is faulty. More specifically, the master slave control unit 141 determines whether or not the IMU unit 121 set as the master is faulty, for example, on the basis of whether or not the state is a state in which the measurement result from the IMU unit 121 set as the master has not been transmitted.

In step S54, in a case where the state is a state in which the measurement result from the IMU unit 121 set as the master has not been transmitted and it has been determined that the IMU unit 121 set as the master is faulty, the processing proceeds to step S55.

In step S55, the master slave control unit 141 sets the IMU unit 121 having the smallest ID as the master and re-sets the other IMU units 121 as slaves on the basis of the IDs of the IMU units 121 set as the slaves. At this time, the master slave control unit 141 sets the host controller 124 as the transmission destination of the master and sets the IMU unit 121 of the master as the transmission destination of the slaves.

At this time, in the IMU unit 121, in step S80, the master slave management unit 151 in the control unit 132 of the IMU unit 121 determines whether or not to re-set the master.

In step S80, in the case of re-setting the master by the master slave control unit 141 of the host controller 124 through the processing of step S55, the processing returns to step S72.

In other words, in this case, as at the time of activation, the master slave management unit 151 in the control unit 132 of the IMU unit 121 receives the setting content by the master slave control unit 141 and stores the setting information of the master or the slave. The transmission destination control unit 152 receives the setting content by the master slave control unit 141, sets the transmission destination as the host controller 124 in the case of the master, sets the transmission destination as the IMU unit 121 set as the master in the case of the slave, and stores the setting content.

In step S54, when the IMU unit 121 set as the master is not faulty, the processing of step S55 is skipped, and in step S80, it is considered that the master is not re-set, and the processing returns to step S73.

Via the processing described above, in a case where the measurement result cannot be acquired from the IMU unit 121 set as the master, the master slave control unit 141 of the host controller 124 sets a substitute master from among the IMU units 121 set as the slaves and re-sets the other IMU units as the slaves.

Accordingly, at the time when the measurement result cannot be acquired from the IMU unit 121 set as the master, the IMU unit 121 set as the master is determined to be faulty. Then, one of the IMU units 121 set as the slaves until then is set as the substitute master, and the other IMU units 121 are set as slaves, so that the measurement result can be acquired again.

As a result, it is possible to realize the multi-IMU 101 with high accuracy and high fault tolerance at a low cost.

### 6. Second Application Example of First Embodiment

In the example described above, in a case where the measurement result is not supplied from the IMU unit 121 set as the master, the master slave control unit 141 determines that a fault has occurred and continues the output of the measurement result by setting one of the IMU units 121 set as the slaves as a master instead.

However, outputting the measurement result does not help deal with cases where a fault in the IMU unit 121 causes an appropriate value to not be output.

However, since it is not possible to check whether or not the measurement result output from the IMU unit 121 is appropriate by a single unit, in general, the measurement results of three or more IMU units 121 are compared, the presence or absence of a measurement result which is an outlier is detected, and the IMU unit 121 which outputs the measurement result which is an outlier is considered to be faulty.

Thus, the other unit-combining unit 154 of the control unit 132 in the IMU unit 121 set as the master determines the presence or absence of a fault in the IMU unit 121 by detecting the presence or absence of an outlier by combining the measurement results from the IMU units 121 set as the slaves and the self-combined value, which is its own measurement result, obtained by combining with the self-combining unit 153. Then, the other unit-combining unit 154 registers the IMU unit 121 in which the fault is detected and does not use the measurement result in the combining thereafter.

More specifically, for example, as illustrated in Fig. 16, consider a case where the IMU unit 121-0 is set as the master and the IMU units 121-1 to 121-3 are set as the slaves.

In this case, the other unit-combining unit 154 of the IMU unit 121-0 set as the master determines the presence or absence of an outlier by comparing the measurement results from the IMU units 121-1 to 121-3 set as the slaves with its own measurement result.

For example, in a case where it is determined that the measurement result of the IMU unit 121-2 is an outlier from the comparison with the other measurement results, the other unit-combining unit 154 considers that the IMU unit 121-2 is faulty and registers the corresponding ID as faulty.

In the subsequent processing, the other unit-combining unit 154 excludes the measurement result from the IMU unit 121-2 corresponding to the ID registered as faulty, and combines the measurement results from the other IMU units 121-1 and 121-3 set as the slaves and the self-combined value, which is its own measurement result to generate the self and other combined value. The transmission unit 155 outputs the self and other combined value as the measurement result to the host controller 124.

By such processing, as indicated by a thick dashed line arrow in Fig. 16, the measurement result supplied from the IMU unit 121-2 considered to be faulty via the I2C bus (I2C1) 143-1 is excluded.

That is, the measurement result supplied from the IMU unit 121-3 via the I2C bus (I2C0) 143-0 as indicated by the thick dot-dash line arrow in Fig. 16, the measurement result supplied from the IMU unit 121-1 via the I2C bus (I2C2) 143-2 as indicated by the thick solid line arrow, and its own measurement result are combined to generate the self and other combined value. The generated self and other combined value is transmitted to the host controller 124 as the measurement result.

Accordingly, the combined result excluding the measurement result from the faulty IMU unit 121-2 that outputs an outlier for the measurement result can be output to the host controller 124 as the measurement result. As a result, it is possible not to use the measurement result of the faulty IMU unit 121, and it is possible to suppress a decrease in measurement accuracy caused by using the measurement result of the faulty IMU unit 121.

With such a configuration, it is possible to deal with an individual abnormality in the IMU unit 121, and thus it is possible to suppress a decrease in measurement accuracy based on a fault. As a result, it is possible to realize the multi-IMU 101 with high accuracy when measuring acceleration and angular velocity at a low cost.

### Measurement Processing by Multi-IMU of Second Application Example of First Embodiment

Next, the measurement processing by the multi-IMU of a second application example according to the first embodiment will be described with reference to a flowchart of Fig. 17.

The processing of steps S91 to S97, S111 to S115, and S122 to S124 in the flowchart of Fig. 17 is similar to the processing of steps S51 to S57, S71 to S75, and S78 to S80 in the flowchart of Fig. 15, and thus description thereof will be omitted.

That is, when the multi-IMU 101 is activated, one of the plurality of IMU units 121 is set as the master, and the others are set as the slaves. Then, the IMU units 121 set as the slaves supply the measurement result to the IMU unit 121 set as the master. The IMU unit 121 set as the master combines the measurement results from the IMU units 121 set as the slaves and the self-combined value, which is its own measurement result, to generate the self and other combined value, and transmits the self and other combined value to the host controller 124 as the measurement result.

In step S116, the other unit-combining unit 154 of the control unit 132 of the IMU unit 121 set as the master combines the measurement result of the IMU unit 121 other than the IMU unit 121 registered as faulty and its own measurement result obtained by combining with the self-combining unit 153 to generate a self and other combined value. In the first processing, since there is no information of the ID of the IMU unit 121 registered as faulty, the measurement results of all the IMU units 121 and the self-combined value, which is its own measurement result, are combined.

In step S117, the other unit-combining unit 154 compares all the acquired measurement results and searches for the presence or absence of an outlier.

In step S118, the other unit-combining unit 154 determines whether or not there is a faulty IMU unit 121 on the basis of the presence or absence of an outlier.

In step S118, if it is determined that there is a faulty IMU unit 121, the processing proceeds to step S119.

In step S119, the other unit-combining unit 154 registers the ID for identifying the IMU unit 121 that outputs the measurement result corresponding to an outlier as faulty.

In step S120, the other unit-combining unit 154 excludes the measurement result from the faulty IMU unit 121 when combining the measurement results and generates the self and other combined value.

In step S121, the other unit-combining unit 154 outputs the self and other combined value as the measurement result to the host controller 124.

In step S118, if it is determined that there is no faulty IMU unit 121, the processing of steps S119 and S120 is skipped, and the combined result of step S116 is output to the host controller 124 by the processing of step S120.

By the processing described above, the self and other combined value excluding the measurement result from the faulty IMU unit 121 that outputs an outlier for the measurement result can be output to the host controller 124 as the measurement result. Accordingly, it is possible not to use the measurement result of the faulty IMU unit 121, and it is possible to suppress a decrease in measurement accuracy caused by using the measurement result of the faulty IMU unit 121.

Note that in a case where the other unit-combining unit 154 of the IMU unit 121 set as the master determines that itself is faulty, the other combining unit 154 may continue the processing by excluding its own measurement result and combining the measurement results. In this case, since there is a possibility that the function of the other unit-combining unit 154 itself is faulty, the transmission of the combined measurement result may be stopped.

Accordingly, the master slave control unit 141 of the host controller 124 can recognize occurrence of a fault because the measurement result is not supplied from the IMU unit 121 set as the master and can newly set a substitute master to realize processing excluding itself.

As a result, it is possible to deal with an individual abnormality in the IMU unit 121, and thus it is possible to suppress a decrease in measurement accuracy based on a fault while being able to further enhance the fault tolerance.

### 7. Second Embodiment

In the example described above, as illustrated in Fig. 6, the multi-IMU 101 is configured by connecting the four IMU units 121 to the four corners on the substrate 111 and electrically integrating and connecting the IMU units to the integrated substrate 123 by the cable 122.

However, the four IMU units 121 may have another configuration as long as they are electrically connected.

For example, as illustrated in Fig. 18, the IMU units 121-0 to 121-3 may be electrically connected to a foldable flexible cable 211 and integrally formed, housed in a housing 221b, formed on a base plate 221a, and connected to the host controller 124 via a cable 222.

The left part of Fig. 18 illustrates a configuration in which the individual IMU units 121-0 to 121-3 are electrically connected to the flexible cable 211.

In addition, in the right part of Fig. 18, the IMU units 121-0 to 121-3 are compactly integrally formed by folding the flexible cable 211 in an electrically connected state to form an IMU unit box 221, and the IMU unit box 221 and the host controllers 124 are connected to each other via the cable 222 to form a multi-IMU 201.

The IMU unit box 221 is constituted by the base plate 221a and the housing 221b. The flexible cable 211 in a state where the IMU units 121-0 to 121-3 are electrically connected is folded and connected to the base plate 221a.

With such a configuration, the four IMU units 121-0 to 121-3 are electrically connected in a layered state on the base plate 221a. The four IMU units 121-0 to 121-3 layered on the base plate 221a are housed in the housing 221b, and the base plate 221a and the housing 221b are integrally formed to form the IMU unit box 221.

More specifically, the flexible cable 211 has an H-shaped configuration as illustrated in the left part of Fig. 19, and terminals 211a-0 to 211a-3 are provided at respective end portions . Further, the cable 222 is integrally formed from a bar portion at the center of the H-shape constituting the flexible cable 211, and a terminal 222a at the end portion of the cable 222 is electrically connected to the host controller 124.

As illustrated in the center part of Fig. 19, the terminals 211a-0 to 211a-3 are connected to the terminals 121a-0 to 121a-3 of the IMU units 121-0 to 121-3, respectively.

Then, by folding the flexible cable 211, as illustrated in the right part of Fig. 19, the IMU units 121-0 to 121-3 are layered in order from the left of the diagram and integrally formed.

With such a configuration, the four IMU units 121-0 to 121-3 can be compactly integrally formed.

As described above, even in the multi-IMU 201 of Figs. 18 and 19, by using a plurality of the same IMU units 121, it is possible to measure the acceleration and the angular velocity with high accuracy at a low cost.

### 8. Third Embodiment

In the multi-IMU 201 described above, the IMU units 121-0 to 121-3 are electrically connected to the foldable flexible cable 211 to be compactly integrally formed to form the IMU unit box 221, and the IMU unit box 221 is connected to the host controller 124 via the cable 222.

However, the IMU unit box 221 itself as illustrated in Fig. 18 may be treated as an IMU unit, and a multi-IMU including a plurality of IMUs 131 may be configured.

Fig. 20 illustrates a configuration example of a multi-IMU including a larger number of IMUs 131, with the IMU unit box 221 itself being regarded as one IMU unit.

A multi-IMU 251 of Fig. 20 includes IMU unit boxes 221-1 to 221-8, cables 222-1 to 222-8, an integrated substrate 262, an integrated processing unit 263, and a controller 124.

The IMU unit boxes 221-1 to 221-8 are connected to the integrated substrate 262 via the cables 222-1 to 222-8, respectively.

The integrated substrate 262 is provided with the integrated processing unit 263 and combines the measurement results supplied from the IMU unit boxes 221-1 to 221-8 and outputs the combined result to the host controller 124 via a terminal 262a provided on the integrated substrate 262.

Since the integrated processing unit 263 has the same function as the other unit-combining unit 154 in the control unit 132 of the IMU unit 121, for example, the IMU unit 121 may be substituted for the integrated processing unit 263, and only the other combining unit 154 may be caused to function.

That is, eight IMU unit boxes 221 are provided in the multi-IMU 251 of Fig. 20, four IMU units 121 are provided in the IMU unit box 221, and eight IMUs 131 are provided in the IMU unit 121.

Thus, in the multi-IMU 251 of Fig. 20, a total of 256 IMUs 131 are provided.

The processing in the multi-IMU 251 of Fig. 20 is similar to the processing described above, but the host controller 124 controls the 32 IMU units 121.

As described above, also in the multi-IMU 251 of Fig. 20, by using a plurality of identical IMU units 121, it is possible to achieve cost reduction and realize measurement accuracy improvement.

### 9. Fourth Embodiment

In the example described above, the master and the slaves of the plurality of IMU units 121 are controlled by the host controller 124, and the measurement results related to the acceleration and the angular velocity are acquired from the IMU unit 121 set as the master.

However, in addition to the function of the IMU unit, a plurality of microcomputers capable of executing signal processing based on the measurement result or a plurality of processor-mounted substrates (also referred to as microcomputer boards) which are boards on which processors are mounted may be used to acquire the measurement result related to the acceleration and the angular velocity and to realize the signal processing based on the acquired measurement result with high accuracy.

Fig. 21 illustrates a configuration example of a multi-IMU using a plurality of processor-mounted substrates. The upper part of Fig. 21 is an external perspective view of a multi-IMU 301 using a plurality of processor-mounted substrates, and the lower part is a side view of the multi-IMU 301.

The multi-IMU 301 is configured by processor-mounted substrates 321-0 to 321-3 and a host controller board 322.

The processor-mounted substrates 321-0 to 321-3 are configured to correspond to the IMU units 121-0 to 121-3, respectively, and the host controller board 322 is configured to correspond to the host controller 124.

More specifically, as illustrated in Fig. 22, IMUs 331-1 to 331-4, a female stack connector 332a, and the dip switch 333 are provided on a front surface (the surface viewed from above in Fig. 21 is the front face) 321A of the processor-mounted substrate 321.

Further, IMUs 331-5 to 331-8, a male stack connector 332b, and a control processor 334 are provided on the back surface (the surface viewed from below in Fig. 21 is the back surface) 321B of the processor-mounted substrate 321.

In Fig. 22, the upper left part is an external perspective view of the front surface 321A of the processor-mounted substrate 321, and the lower left part is an external perspective view of the back surface 321B of the processor-mounted substrate 321.

The upper center part of Fig. 22 is an external perspective view of the front surface 321A of the processor-mounted substrate 321 in a state where a cover 351 for suppressing a decrease in accuracy due to the influence of irregular outside air by covering the IMUs 331-1 to 331-4 is installed.

Also, the lower center part of Fig. 22 is an external perspective view of the back surface 321B of the processor-mounted substrate 321 in a state where the cover 351 for suppressing a decrease in accuracy due to the influence of irregular outside air by covering the IMUs 331-5 to 331-8 is installed.

The upper right part of Fig. 22 is an outer cover portion 351A of the cover 351, and the lower right part of Fig. 33 is an inner cover portion 351B of the cover 351.

The IMU 331-1 to IMU 331-8 have configurations corresponding to the IMUs 131-1 to 131-8, respectively, and have the same functions. In addition, in the front surface portion 321A, the IMUs 331-1 to 331-4 are protected by the cover 351, and in the back surface portion 321B, the IMUs 331-5 to 331-8 are protected by the cover 351.

The female stack connector 332a and the male stack connector 332b are provided at positions corresponding to each other, and the plurality of processor-mounted substrates 321 are layered and electrically connected by inserting the protrusion portion of the male stack connector 332b into the hole portion of the female stack connector 332a.

The dip switch 333 is a physical switch that is operated when switching a predetermined operation mode.

The control processor 334 has a configuration corresponding to the above-described control unit 132 and has a similar function as the control unit 132. Further, the control processor 334 can perform signal processing on a measurement result via programming. For example, the control processor 334 can calculate a position, a moving distance, a speed, and the like on the basis of information of the acceleration and the angular velocity which are the measurement results and output the calculated results together with the measurement results.

Thus, the host controller board 322 can combine and output the calculation results based on the respective measurement results in addition to the measurement results of the acceleration and the angular velocity supplied from the plurality of processor-mounted substrates 321.

As described above, even in the multi-IMU 301 of Figs. 21 and 22, by using a plurality of the same processor-mounted substrates 321, it is possible to combine and output the calculation results based on the respective measurement results in addition to the accelerations and the angular velocities with high accuracy and at a low cost.

### 10. Example of Software Execution

The above-described series of processing can be executed by hardware, but it can also be executed by software. When the series of processing is executed by software, programs that configure the software are installed from a recording medium into a computer built into dedicated hardware, or into, for example, a general-purpose computer that can execute various functions by installing various programs.

Fig. 23 illustrates an example of the configuration of a general-purpose computer. The personal computer has a built-in central processing unit (CPU) 1001. An input/output interface 1005 is connected to the CPU 1001 via a bus 1004. A read only memory (ROM) 1002 and a random access memory (RAM) 1003 are connected to the bus 1004.

An input unit 1006 configured with input devices such as a keyboard and a mouse through which a user inputs operation commands, an output unit 1007 which outputs a processing operation screen and an image of a processing result to a display device, a storage unit 1008 configured with a hard disk drive or the like for storing programs and various pieces of data, and a communication unit 1009, configured with a local area network (LAN) adapter or the like, for executing a communication processing via a network represented by the Internet are connected to an input/output interface 1005. In addition, a drive 1010 for reading and writing data from and to a removable storage medium 1011 such as a magnetic disk (including a flexible disk), an optical disk (including a compact disc-read only memory (CD-ROM), and a digital versatile disc (DVD)), a magneto-optical disk (including a mini disc (MD)), or a semiconductor memory is connected.

The CPU 1001 executes various processing in accordance with a program stored in the ROM 1002 or a program that is read out from the removable storage medium 1011, such as a magnetic disk, an optical disk, a magneto-optical disk, or a semiconductor memory, installed in the storage unit 1008, and loaded into the RAM 1003 from the storage unit 1008. The RAM 1003 also appropriately stores data necessary for the CPU 1001 to execute various processes.

In the computer configured as described above, the CPU 1001 loads the program stored in the storage unit 1008, for example, into the RAM 1003 via the input/output interface 1005 and the bus 1004, and executes the program, thereby performing the above-mentioned series of processing.

The program executed by the computer (CPU 1001) can be recorded, for example, on the removable storage medium 1011 which is a package medium or the like, and provided. The program can also be provided via a wired or wireless transmission medium, such as a local area network, the Internet, or digital satellite broadcasting.

In the computer, the program can be installed in the storage unit 1008 via the input/output interface 1005 by inserting the removable storage medium 1011 into the drive 1010. The program can also be received by the communication unit 1009 via a wired or wireless transmission medium and installed in the storage unit 1008. Other than the above manners, the program can be pre-installed in the ROM 1002 or the storage unit 1008.

Note that the program executed by the computer may be a program for executing the processing in time series in the order described in the present specification, or may be a program for executing the processing in parallel or at a necessary timing such as when a call is performed.

The CPU 1001 in Fig. 23 realizes the functions of the host controllers 124 in Figs. 8, 18, and 20 and the host controller board 322 in Fig. 21.

Additionally, in the present specification, a system refers to a collection of a plurality of components (devices, modules (parts), and the like), regardless of whether all of the components are in the same housing. Therefore, the system refers to both a plurality of devices housed in separate housings and connected via a network, and one device in which a plurality of modules are housed in one housing.

The embodiments of the present disclosure are not limited to the above-described embodiments, and various kinds of modifications can be made without departing from the gist of the present disclosure.

For example, the present disclosure can adopt a configuration of cloud computing in which a single function is shared and processed jointly by a plurality of devices via a network.

Further, each step described in the above-described flowchart can be performed by one apparatus or can be shared and executed by a plurality of apparatuses.

Further, when a single step includes multiple processes, the multiple processes included in that single step can be executed by a single device, or can be shared and executed by multiple devices.

The present disclosure may also be configured as follows.
<1> A multi-IMU chip includes:
   an inertial measurement unit (IMU) unit provided with N IMUs configured to detect acceleration and angular velocity;
   a self-combining unit configured to combine measurement results of the N IMUs and generate a self-combined value;
   a self and other combining unit configured to combine the self-combined value and an other unit combined value which is a combined value of the measurement results of the N IMUs of an other IMU unit different from the IMU unit and generate a self and other combined value; and
   a transmission unit configured to transmit the self-combined value or the self and other combined value as the measurement results to a designated transmission destination.
<2> The multi-IMU chip according to <1> further includes:
   a master slave management unit configured to receive and manage setting of a master or a slave by a host controller, wherein
   in the master slave management unit, in a case of being set as the slave, the transmission unit transmits the self-combined value or the self and other combined value as the measurement results to a designated other IMU unit, and
   in the master slave management unit, in a case of being set as the master, the transmission unit transmits the self and other combined value as the measurement results to the host controller.
<3> In the multi-IMU chip according to <2>, the transmission unit transmits at least the self-combined value or the self and other combined value as the measurement results to an other IMU unit via wired communication or wireless communication, and
   the transmission unit transmits the self and other combined value as the measurement results to the host controller via wired communication or wireless communication.
<4> In the multi-IMU chip according to <3>, the transmission unit transmits at least the self-combined value or the self and other combined value as the measurement results to an other IMU unit via an Inter Integrated Circuits (I2C) (registered trademark) bus or an Improved Inter Integrated Circuits (I3C) (registered trademark) bus, and
   the transmission unit transmits the self and other combined value as the measurement results to the host controller via a Serial Peripheral Interface (SPI) bus.
<5> The multi-IMU chip according to <2> further includes:
   a transmission destination setting unit configured to set the other IMU unit as a transmission destination of the self-combined value or the self and other combined value, wherein
   the transmission unit transmits the self-combined value or the self and other combined value as the measurement results to the other IMU unit set by the transmission destination setting unit.
<6> In the multi-IMU chip according to <5>, in the master slave management unit, in a case of being set as the slave, in the transmission destination setting unit, the other IMU unit corresponding to a transmission destination of the self-combined value or the self and other combined value is set as the master in the master slave management unit.
<7> In the multi-IMU chip according to <2>, the master or the slave set in the master slave management unit is set at a time of activation by the host controller.
<8> In the multi-IMU chip according to <2>, the master or the slave set in the master slave management unit is set on a basis of an identifier for identifying the IMU unit or the other IMU unit by the host controller.
<9> In the multi-IMU chip according to <2>, in the master slave management unit, in a case of being set as the master, the self and other combining unit compares the self-combined value and an other unit combined value of the other IMU unit to detect absence or presence of an outlier, and if the outlier is detected, combines the self-combined value and the other unit combined value excluding the self-combined value or the other unit combined value corresponding to the outlier to generate the self and other combined value.
<10> In the multi-IMU chip according to <9>, when the outlier is detected, the self and other combining unit stores an identifier for identifying the IMU unit or the other IMU unit corresponding to the outlier as fault information and thereafter combines the self-combined value and the other unit combined value excluding the self-combined value of the IMU unit corresponding to the identifier registered in the fault information or the other unit combined value of the other IMU unit corresponding to the identifier registered in the fault information to generate the self and other combined value.
<11> In the multi-IMU chip according to <2>, in the master slave management unit, in a case of being set as the master, the self and other combining unit compares the self-combined value and an other unit combined value of the other IMU unit to detect absence or presence of the outlier, and if the self-combined value is the outlier, the transmission unit stops transmission of the self and other combined value as the measurement results to the host controller.
<12> In the multi-IMU chip according to <11>, the master or the slave set in the master slave management unit is re-set by the host controller in a case of the measurement results not being transmitted to the host controller.
<13> In the multi-IMU chip according to <1>, the N number is one or more.
<14> An operation method for a multi-IMU chip provided with an inertial measurement unit (IMU) unit provided with N IMUs configured to detect acceleration and angular velocity includes:
   combining measurement results of the N IMUs and generating a self-combined value;
   combining the self-combined value and an other unit combined value which is a combined value of the measurement results of the N IMUs of an other IMU unit different from the IMU unit and generating a self and other combined value; and
   transmitting the self-combined value or the self and other combined value as the measurement results to a designated transmission destination.
<15> A program causes a computer configured to control a multi-IMU chip provided with an inertial measurement unit (IMU) unit provided with N IMUs configured to detect acceleration and angular velocity to function as:
   a self-combining unit configured to combine measurement results of the N IMUs and generate a self-combined value;
   a self and other combining unit configured to combine the self-combined value and an other unit combined value which is a combined value of the measurement results of the N IMUs of an other IMU unit different from the IMU unit and generate a self and other combined value; and
   a transmission unit configured to transmit the self-combined value or the self and other combined value as the measurement results to a designated transmission destination.
<16> A multi-IMU includes:
   a plurality of multi-IMU chips each including
   an inertial measurement unit (IMU) unit provided with N IMUs configured to detect acceleration and angular velocity,
   a self-combining unit configured to combine measurement results of the N IMUs and generate a self-combined value,
   a self and other combining unit configured to combine the self-combined value and an other unit combined value which is a combined value of the measurement results of the N IMUs of an other IMU unit different from the IMU unit and generate a self and other combined value, and
   a transmission unit configured to transmit the self-combined value or the self and other combined value as the measurement results to a designated transmission destination; and
   a host controller configured to set the IMU unit as master or slave and acquire the measurement results, wherein
   the transmission unit of the IMU unit set as the master transmits the self and other combined value as a measurement result to the host controller.
<17> In the multi-IMU according to <16>, the plurality of multi-IMU chips are provided on a same substrate and are electrically connected to the host controller.
<18> In the multi-IMU according to <16>, the plurality of multi-IMU chips are electrically connected to the host controller via a flexible cable.
<19> In the multi-IMU according to <16>, the multi-IMU chips are processor-mounted substrates.
<20> In the multi-IMU according to <19>, the plurality of processor-mounted substrates are layered and physically and electrically connected to one another via a stack connector and are also electrically connected to a host controller board function as the host controller.

### Reference Signs List

101 Multi-IMU, 121, 121-0 to 121-3 IMU unit, 124 Host controller, 131, 131-1 to 131-8 IMU, 132 Control unit, 141 Master slave control unit, 142 SPI bus, 143, 143-0 to 143-2 I2C bus, 151 Master slave management unit, 152 Transmission destination control unit, 153 Self-combining unit, 154 Other unit-combining unit, 155 ID storage unit, 201 Multi-IMU, 221, 221-1 to 221-8 IMU unit box, 221a Substrate, 221b Housing, 251 Multi-IMU, 301 Multi-IMU, 321, 321-0 to 321-3 Processor-mounted substrate, 322 Host controller board, 331, 331-1 to 331-8 IMU, 334 Control processor

## Claims

1. A multi-IMU chip comprising:
an inertial measurement unit (IMU) unit provided with N IMUs configured to detect acceleration and angular velocity;
a self-combining unit configured to combine measurement results of the N IMUs and generate a self-combined value;
a self and other combining unit configured to combine the self-combined value and an other unit combined value which is a combined value of the measurement results of the N IMUs of an other IMU unit different from the IMU unit and generate a self and other combined value; and
a transmission unit configured to transmit the self-combined value or the self and other combined value as the measurement results to a designated transmission destination.

2. The multi-IMU chip according to claim 1, further comprising:
a master slave management unit configured to receive and manage setting of a master or a slave by a host controller, wherein
in the master slave management unit, in a case of being set as the slave, the transmission unit transmits the self-combined value or the self and other combined value as the measurement results to a designated other IMU unit, and
in the master slave management unit, in a case of being set as the master, the transmission unit transmits the self and other combined value as the measurement results to the host controller.

3. The multi-IMU chip according to claim 2, wherein
the transmission unit transmits at least the self-combined value or the self and other combined value as the measurement results to an other IMU unit via wired communication or wireless communication, and
the transmission unit transmits the self and other combined value as the measurement results to the host controller via wired communication or wireless communication.

4. The multi-IMU chip according to claim 3, wherein
the transmission unit transmits at least the self-combined value or the self and other combined value as the measurement results to another IMU unit via an Inter Integrated Circuits (I2C) (registered trademark) bus or an Improved Inter Integrated Circuits (I3C) (registered trademark) bus, and
the transmission unit transmits the self and other combined value as the measurement results to the host controller via a Serial Peripheral Interface (SPI) bus.

5. The multi-IMU chip according to claim 2, further comprising:
a transmission destination setting unit configured to set the other IMU unit as a transmission destination of the self-combined value or the self and other combined value, wherein
the transmission unit transmits the self-combined value or the self and other combined value as the measurement results to the other IMU unit set by the transmission destination setting unit.

6. The multi-IMU chip according to claim 5, wherein
in the master slave management unit, in a case of being set as the slave, in the transmission destination setting unit, the other IMU unit corresponding to a transmission destination of the self-combined value or the self and other combined value is set as the master in the master slave management unit.

7. The multi-IMU chip according to claim 2, wherein
the master or the slave set in the master slave management unit is set at a time of activation by the host controller.

8. The multi-IMU chip according to claim 2, wherein
the master or the slave set in the master slave management unit is set on a basis of an identifier for identifying the IMU unit or the other IMU unit by the host controller.

9. The multi-IMU chip according to claim 2, wherein
in the master slave management unit, in a case of being set as the master, the self and other combining unit compares the self-combined value and an other unit combined value of the other IMU unit to detect absence or presence of an outlier, and if the outlier is detected, combines the self-combined value and the other unit combined value excluding the self-combined value or the other unit combined value corresponding to the outlier to generate the self and other combined value.

10. The multi-IMU chip according to claim 9, wherein
when the outlier is detected, the self and other combining unit stores an identifier for identifying the IMU unit or the other IMU unit corresponding to the outlier as fault information and thereafter combines the self-combined value and the other unit combined value excluding the self-combined value of the IMU unit corresponding to the identifier registered in the fault information or the other unit combined value of the other IMU unit corresponding to the identifier registered in the fault information to generate the self and other combined value.

11. The multi-IMU chip according to claim 2, wherein
in the master slave management unit, in a case of being set as the master, the self and other combining unit compares the self-combined value and an other unit combined value of the other IMU unit to detect absence or presence of the outlier, and if the self-combined value is the outlier, the transmission unit stops transmission of the self and other combined value as the measurement results to the host controller.

12. The multi-IMU chip according to claim 11, wherein
the master or the slave set in the master slave management unit is re-set by the host controller in a case of the measurement results not being transmitted to the host controller.

13. The multi-IMU chip according to claim 1, wherein
the N number is one or more.

14. A method for operating a multi-IMU chip provided with
an inertial measurement unit (IMU) unit provided with N IMUs configured to detect acceleration and angular velocity, the operation method comprising:
combining measurement results of the N IMUs and generating a self-combined value;
combining the self-combined value and an other unit combined value which is a combined value of the measurement results of the N IMUs of an other IMU unit different from the IMU unit and generating a self and other combined value; and
transmitting the self-combined value or the self and other combined value as the measurement results to a designated transmission destination.

15. A program for causing a computer configured to control a multi-IMU chip provided with an inertial measurement unit (IMU) unit provided with N IMUs configured to detect acceleration and angular velocity to function as:
a self-combining unit configured to combine measurement results of the N IMUs and generate a self-combined value;
a self and other combining unit configured to combine the self-combined value and an other unit combined value which is a combined value of the measurement results of the N IMUs of an other IMU unit different from the IMU unit and generate a self and other combined value; and
a transmission unit configured to transmit the self-combined value or the self and other combined value as the measurement results to a designated transmission destination.

16. A multi-IMU comprising:
a plurality of multi-IMU chips each including
an inertial measurement unit (IMU) unit provided with N IMUs configured to detect acceleration and angular velocity,
a self-combining unit configured to combine measurement results of the N IMUs and generate a self-combined value,
a self and other combining unit configured to combine the self-combined value and an other unit combined value which is a combined value of the measurement results of the N IMUs of an other IMU unit different from the IMU unit and generate a self and other combined value, and
a transmission unit configured to transmit the self-combined value or the self and other combined value as the measurement results to a designated transmission destination; and
a host controller configured to set the IMU unit as master or slave and acquire the measurement results, wherein
the transmission unit of the IMU unit set as the master transmits the self and other combined value as a measurement result to the host controller.

17. The multi-IMU according to claim 16, wherein
the plurality of multi-IMU chips are provided on a same substrate and are electrically connected to the host controller.

18. The multi-IMU according to claim 16, wherein
the plurality of multi-IMU chips are electrically connected to the host controller via a flexible cable.

19. The multi-IMU according to claim 16, wherein
the plurality of multi-IMU chips are a plurality of processor-mounted substrates.

20. The multi-IMU according to claim 19, wherein
the plurality of processor-mounted substrates are layered and physically and electrically connected to one another via a stack connector and are also electrically connected to a host controller board function as the host controller.
